(19) Europäisches Patentamt
European Patent Office
Office européen des brevets

(11) **EP 4 509 560 A1**

(12) **EUROPEAN PATENT APPLICATION**

(43) Date of publication:
**19.02.2025 Bulletin 2025/08**

(21) Application number: 23192132.1

(22) Date of filing: **18.08.2023**

(51) International Patent Classification (IPC):
**C08L 23/06** (2006.01)

(52) Cooperative Patent Classification (CPC):
(C-Sets available)
**C08L 23/06;** C08L 2201/00; C08L 2203/202;
C08L 2207/20; C08L 2310/00          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **PRIETO, Oscar**
  **444 86 Stenungsund (SE)**
• **GSCHNEIDTNER, Tina**
  **444 86 Stenungsund (SE)**
• **RIBARITS, Elisabeth**
  **444 86 Stenungsund (SE)**

(74) Representative: **TBK**
  **Bavariaring 4-6**
  **80336 München (DE)**

(54) **HALOGEN FREE FIRE RETARDANT COMPOSITION FOR JACKETING COMPRISING POST-CONSUMER RECYCLED-DERIVED POLYMER**

(57)     The present invention provides a novel halogen-free flame retardant (HFFR) post-consumer recycled (PCR)-derived polymer composition suitable for flame retardant layer of a wire or cable, preferably as a flame retardant jacketing layer, which comprises of from 10.0 to 45.0 wt% of a specific thermoplastic PCR polymer comprised of high density polyethylene (HDPE) polymer showing favorable to excellent mechanical properties combined with favorable to excellent flame retardant and safety properties.

EP 4 509 560 A1

(52) Cooperative Patent Classification (CPC): (Cont.)

C-Sets
**C08L 23/06, C08L 23/06, C08L 23/0869,
C08L 83/04, C08K 3/26, C08K 3/04**

**Description**

**Background of the Invention**

The present invention relates to a halogen-free flame retardant (HFFR) post-consumer recycled (PCR)-derived polymer composition, which comprises of from 10.0 to 45.0 wt% of specific thermoplastic PCR polymer comprised of high density polyethylene (HDPE) polymer, and that shows favorable to excellent mechanical properties, especially in terms of flexural modulus, impact strength, tensile strength and elongation at break combined with favorable to excellent flame retardant and safety properties, especially in terms of dripping.

Polyolefins, in particular polyethylene (PE) and polypropylene (PP) are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is a great potential for intelligent reuse of plastic waste streams and for mechanical recycling of plastic wastes.

Generally, recycled materials from post-consumer waste streams are often mixtures of both polypropylene (PP) and polyethylene (PE) and commercial recyclates from post-consumer waste sources are conventionally cross contaminated with non-polyolefin materials, such as polyethylene terephthalate, polyamide, polystyrene or non-polymeric substances like wood, paper, glass or aluminum. These cross-contaminations can drastically limit final applications or recycling streams.

However, recycled polyolefin materials normally have properties, which are much worse than those of the virgin materials, unless the amount of recycled polyolefin added to the final compound is extremely low. This can exclude the application of recycled materials for high quality parts and demanding applications, such as jacketing. In order to improve the mechanical properties of these recycled materials, generally relatively large amounts of virgin materials (produced from oil) have to be added. For example, such materials often have limited impact strength and poor mechanical properties (such as e.g. brittleness) and thus, they do not fulfil customer requirements for several applications, e.g. jacketing materials (for cables), containers, automotive components or household articles. Especially the requirement for jacketing materials that are fire retardant are getting more and more demanding in view of balancing environmental impact of the product, its safety and its mechanical properties, which can be said to be a trade-off relationship. Moreover, crosslinked polyethylene resin is often used for power cable jacketing, but since crosslinked polyethylene resin is a thermoset resin, it is not recyclable so that there is a demand for an eco-friendly non-crosslinked type thermoplastic polyethylene resin for use in compositions for jacketing.

WO 2021/233818 A1 describes an upgrading of thermoplastic PE recycling using virgin high density polyethylene (HDPE) to give jacketing materials that have an acceptable ESCR performance. However, this document does not relate to flame retardant compositions, which has to fulfil specific flame retardant tests and leaves room for improved mechanical and safety properties.

Due to the high demands on flame retardant jacketing composition to reduce environmental impact in terms of e.g. being halogen free as well as reusing plastic waste stream products and being itself recyclable, to show good processability, appearance and safety as well as having improved mechanical properties, there is a need for new and improved halogen-free flame retardant (HFFR) post-consumer recycled (PCR)-derived polymer compositions.

The present invention is based on the surprising finding that a composition with good recyclable, processability, very good mechanical properties and even improved impact strength properties, that fulfils all required flame retardant (jacketing) key properties and which can be improved in dripping is obtainable by providing a halogen-free flame retardant (HFFR) post-consumer recycled (PCR)-derived polymer composition combining suitable amounts of specific components and including of from 10.0 to 45.0 wt% of specific thermoplastic PCR polymer comprised of high density polyethylene (HDPE) polymer.

**Object of the invention**

It is therefore the object of the present invention to provide a halogen-free flame retardant (HFFR) post-consumer recycled (PCR)-derived polymer composition based on a specific thermoplastic PCR polymer comprised of high density polyethylene (HDPE) polymer, wherein the composition is recyclable, has good processability, reduces the environmental impact, shows favorable to excellent mechanical properties, especially in terms of flexural modulus, (improved) impact strength, tensile strength and elongation at break combined with favorable to excellent flame retardant and safety properties, especially in terms of dripping, preferably as a flame retardant jacketing layer, and to provide a wire or cable, comprising a flame retardant layer comprising the halogen-free flame retardant (HFFR) post-consumer recycled (PCR)-derived polymer composition, wherein the flame retardant layer is preferably a flame retardant jacketing layer.

Unexpectedly, this technical object has been solved by providing the present halogen-free flame retardant (HFFR) post-consumer recycled (PCR)-derived polymer composition, its use and a wire or cable comprising the same, wherein the halogen-free flame retardant (HFFR) post-consumer recycled (PCR)-derived polymer composition is characterized by combining suitable amounts of specific components and including of from 10.0 to 45.0 wt% of specific thermoplastic PCR polymer comprised of high density polyethylene (HDPE) polymer.

That is, the present invention according to claim 1 relates to a halogen-free flame retardant (HFFR) post-consumer recycled (PCR)-derived polymer composition comprising, based on the overall weight of the polymer composition, the following components

(A) of from 10.0 to 45.0 wt% of thermoplastic PCR polymer comprised of high density polyethylene (HDPE) polymer and having a melt flow rate $MFR_2$ (190°C, 2.16 kg, ISO 1133) of from 0.10 to 0.80 g/10min and a density (ASTM D792) of from 0.940 to 0.980 g/cm$^3$;

(B) of from 0.0 to 30.0 wt% of virgin HDPE polymer selected from the group consisting of component (B-1) and component (B-2) and mixtures thereof, wherein

component (B-1) is a natural virgin HDPE polymer having a melt flow rate $MFR_2$ (190°C, 2.16 kg, ISO 1133) of from 0.15 to 0.85 g/10min and a density (ASTM D792) of from 0.940 to 0.965 g/cm$^3$, and

component (B-2) is a virgin HDPE polymer, which is blended with carbon black in an amount of from 1.5 to 7.5 wt% with respect to component (B-2) and which has a melt flow rate $MFR_2$ (190°C, 2.16 kg, ISO 1133) of from 1.00 to 2.40 g/10min and a density (ASTM D792) of from 0.945 to 0.975 g/cm$^3$;

(C) of from 15.0 to 25.0 wt% of ethylene butyl acrylate (EBA) copolymer having a butyl acrylate content of from 7.0 to 19.0 wt%, a $MFR_2$ (190°C, 2.16 kg, ISO 1133) of from 0.20 to 4.7 g/10min and a density (ASTM D792) of from 0.850 to 0.995 g/cm$^3$;

(D) of from 2.0 to 12.0 wt% of silicon fluid and/or silicon gum;

(E) of from 20.0 to 45.0 wt% of calcium and/or magnesium carbonate;

(F) of from 1.0 to 10.0 wt% of carbon black;

(G) of from 0.01 to 7.50 wt% of additive(s) selected from group consisting of antioxidant(s), UV-stabilizer(s), and metal deactivator(s) and mixtures thereof, and wherein two or more functions can be combined in the same molecule; and

(H) of from 0.00 to 7.00 wt% of other ingredients,

wherein the sum of components (A), optional (B), (C) to (G) and optional (H) add up to 100 wt%.

The present invention further relates to the use of the halogen-free flame retardant (HFFR) post-consumer recycled (PCR)-derived polymer composition as a flame retardant layer of a wire or cable, preferably as a flame retardant jacketing layer.

The present invention further relates to a wire or cable, comprising the flame retardant layer comprising the halogen-free flame retardant (HFFR) post-consumer recycled (PCR)-derived polymer composition, wherein the flame retardant layer is preferably a flame retardant jacketing layer, and wherein the wire or cable comprises a metal conductor and one or more layers surrounding the metal conductor, wherein at least one of the layers, preferably the jacketing layer, is the flame retardant layer comprising the halogen-free flame retardant (HFFR) post-consumer recycled (PCR)-derived polymer composition. The wire may be a high voltage (HV) or extra high voltage (EHV) power cable.

Preferred embodiments of the invention are depicted in the dependent claims and a detailed description of the invention is provide in the following description.

**Detailed description**

**Halogen-free flame retardant (HFFR) post-consumer recycled (PCR)-derived polymer composition**

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the present invention, the term "recycled" is used to indicate a polymer or material recovered from post-consumer waste, as opposed to virgin polymer or materials. The term "Post-consumer" refers to objects having completed at least a first use cycle (or life cycle), i.e. having already served their first purpose.

The term "virgin" denotes the newly produced materials and/or objects prior to their first use, which have not already been recycled. The term "recycled material" such as used herein denotes materials reprocessed from "recycled waste".

The term "natural" in the context of the present invention means that the components are of natural color. This means that no pigments (including carbon black) are included.

The present invention relates to a halogen-free flame retardant (HFFR) post-consumer recycled (PCR)-derived polymer composition (hereinafter also referred to as HFFR PCR-derived polymer composition or simply polymer composition) comprising, based on the overall weight of the polymer composition, the following components

(A) of from 10.0 to 45.0 wt% of thermoplastic PCR polymer comprised of high density polyethylene (HDPE) polymer and having a melt flow rate $MFR_2$ (190°C, 2.16 kg, ISO 1133) of from 0.10 to 0.80 g/10min and a density (ASTM D792) of from 0.940 to 0.980 $g/cm^3$;

(B) of from 0.0 to 30.0 wt% of virgin HDPE polymer selected from the group consisting of component (B-1) and component (B-2) and mixtures thereof, wherein

component (B-1) is a natural virgin HDPE polymer having a melt flow rate $MFR_2$ (190°C, 2.16 kg, ISO 1133) of from 0.15 to 0.85 g/10min and a density (ASTM D792) of from 0.940 to 0.965 $g/cm^3$, and

component (B-2) is a virgin HDPE polymer, which is blended with carbon black in an amount of from 1.5 to 7.5 wt% with respect to component (B-2) and which has a melt flow rate $MFR_2$ (190°C, 2.16 kg, ISO 1133) of from 1.00 to 2.40 g/10min and a density (ASTM D792) of from 0.945 to 0.975 $g/cm^3$;

C) of from 15.0 to 25.0 wt% of ethylene butyl acrylate (EBA) copolymer having a butyl acrylate content of from 7.0 to 19.0 wt%, a $MFR_2$ (190°C, 2.16 kg, ISO 1133) of from 0.20 to 4.7 g/10min and a density (ASTM D792) of from 0.850 to 0.995 $g/cm^3$;

(D) of from 2.0 to 12.0 wt% of silicon fluid and/or silicon gum;

(E) of from 20.0 to 45.0 wt% of calcium and/or magnesium carbonate;

(F) of from 1.0 to 10.0 wt% of carbon black;

(G) of from 0.01 to 7.50 wt% of additive(s) selected from group consisting of antioxidant(s), UV-stabilizer(s), and metal deactivator(s) and mixtures thereof, and wherein two or more functions can be combined in the same molecule; and

(H) of from 0.00 to 7.00 wt% of other ingredients,

wherein the sum of components (A), optional (B), (C) to (G) and optional (H) add up to 100 wt%.

That is, the HFFR PCR-derived polymer composition in accordance with the present invention comprises the components (A), (B) (optional), (C) to (G) and (H) (optional). The requirement applies that the components (A) and (C) to (G) and, if present, the optional components (B) and (H) add up to 100 wt%. This means for example in case that only components (A) and (C) to (G) are present, these components add up to 100 wt%, but in case that components (A) and (C) to (G) as well as components (B) and/or (H) are present, components (A) and (C) to (G) and components (B) and/or (H) add up to 100 wt%. The defined ranges of the indications of quantity for the individual components are to be understood such that an arbitrary quantity for each of the individual components can be selected within the specified ranges provided that the proviso is satisfied that the sum of all the components (A) and (C) to (G) and optional components (B) and (H) add up to 100 wt%.

The HFFR PCR-derived polymer composition comprises of from 10.0 to 45.0 wt% of the thermoplastic PCR polymer as component (A) (which will be described in more details below) based on the total weight the polymer composition. In preferred embodiments of the invention, the component (A) is contained in the polymer composition in an amount of from 15.0 to 40.0 wt%, more preferably of from 20.0 to 38.0 wt%, even more preferably of from 23.0 to 37.0 wt%, most preferably of from 28.0 to 35.0 wt%. It is to be understood that each combination of lower and upper limit(s) as given in the ranges above is regarded as being individually disclosed, so that the lower and upper limit(s) of the various ranges can be suitable combined to form another range. This general principle applies throughout the entire application to other mentioned ranges and its lower and upper limits.

The HFFR PCR-derived polymer composition comprises of from 0.0 to 30.0 wt% of virgin HDPE polymer selected from the group consisting of component (B-1) and component (B-2) and mixtures thereof as component (B) (which will be described in more details below) based on the total weight the polymer composition. In preferred embodiments of the invention, the optional component (B), if contained, is contained in the polymer composition in an amount of from 0.5 to 20.0 wt%, more preferably of from 1.0 to 16.5 wt%, even more preferably of from 2.0 to 13.0 wt%, yet more preferably of from 2.5 to 8.0 wt%, most preferably 4.0 to 7.5 wt%. Preferably, the component (B) is contained and the component (B) is more preferably the component (B-2), i.e. component (B-1) is not present.

Upon increasing the content of the thermoplastic PCR polymer component (A) to the more and more preferred ranges as indicated above, the content of the component (B), i.e. the virgin high density polyethylene (HDPE) polymer, can be reduced more and more to the respective preferred ranges as indicated above. That is, the weight ratio of component (A) to component (B) is preferably adjusted in the range from 1.1 to 25.0, preferably in the range from 1.2 to 15.0 and more preferably in the range from 2.0 to 9.0, most preferably in the range of 4.0 to 7.5.

As a result, the present thermoplastic composition becomes more and more environmentally friendly by increasing the content of the thermoplastic PCR polymer. In addition, the present invention demonstrates the unexpected and outstanding technical advantage that the substitution or replacement of virgin HDPE polymer by a thermoplastic PCR polymer can even improve the fire retardant characteristics of a HFFR polymer composition, especially in terms of dripping, and can improve the mechanical properties, especially in terms of impact strength both at -20 and 0°C. In addition, an elongation at break can be achieved (about 300%), which is considered optimal for a cable material making it easy to strip the cable.

From this perspective, the content of component (A) is more preferably of from 23.0 to 37.0 wt%, most preferably of from 28.0 to 35.0 wt%, and the weight ratio of component (A) to component (B) is more preferably adjusted in the range from 2.0 to 9.0, most preferably in the range of 4.0 to 7.5.

The HFFR PCR-derived polymer composition comprises of from 15.0 to 25.0 wt% of the ethylene butyl acrylate as component (C) (which will be described in more details below) based on the total weight the polymer composition. In preferred embodiments of the invention, the component (C) is contained in the polymer composition in an amount of from 16.5 to 23.5 wt%, more preferably of from 17.5 to 22.5 wt%, most preferably of from 18.0 to 21.5 wt%. In addition, the weight ratio of component (A) to component (C) is preferably adjusted in the range from 0.7 to 2.5, preferably in the range from 0.9 to 2.2, more preferably in the range from 1.0 to 2.0, most preferably in the range from 1.2 to 1.7. Within these ranges, the effects of the present invention to balance fire retardant properties and good mechanical properties at high levels are more pronounced.

The HFFR PCR-derived polymer composition comprises of from 2.0 to 12.0 wt% of silicon fluid and/or silicon gum as component (D) (which will be described in more details below) based on the total weight the polymer composition. In preferred embodiments of the invention, the component (D) is contained in the polymer composition in an amount of from 2.5 to 10.0 wt%, preferably of from 3.0 to 9.0 wt%, more preferably of from 5.0 to 8.5 wt%. Within these ranges, the effects of the present invention to balance fire retardant properties and good mechanical properties at high levels are more pronounced.

The HFFR PCR-derived polymer composition comprises of from 20.0 to 45.0 wt% of calcium and/or magnesium carbonate as component (E) (which will be described in more details below) based on the total weight the polymer composition. In preferred embodiments of the invention, the component (E) is contained in the polymer composition in an amount of from 22.0 to 42.0 wt%, more preferably of from 24.0 to 38.0 wt%, even more preferably of from 25.0 to 35.0 wt%. Within these ranges, the effects of the present invention to balance fire retardant properties and good mechanical properties at high levels are more pronounced.

The HFFR PCR-derived polymer composition comprises of from 1.0 to 10.0 wt% of carbon black as component (F) (which will be described in more details below) based on the total weight the polymer composition. In preferred embodiments of the invention, the component (F) is contained in the polymer composition in an amount of from 2.0 to 9.0 wt%, more preferably of from 3.0 to 9.0 wt%, even more preferably of from 5.0 to 8.5 wt%. Within these ranges, the effects of the present invention to balance fire retardant properties and good mechanical properties at high levels are more pronounced. In addition, the thermal stability and weathering resistance are improved.

The HFFR PCR-derived polymer composition comprises of from 0.1 to 7.5 wt% of additive(s) as component (G) (which will be described in more details below) based on the total weight the polymer composition. In preferred embodiments of the invention, the component (G) is contained in the polymer composition in an amount of from 0.02 to 5.00 wt%, more preferably of from 0.03 to 3.50 wt%, even more preferably of from 0.10 to 2.50 wt%, most preferably 0.20 to 1.50 wt%.

More preferably, metal deactivator(s) among component (G) is preferably contained in the polymer composition in an amount of from 0.02 to 2.50 wt%, more preferably of from 0.05 to 1.50 wt%, most preferably of from 0.07 to 0.50 wt%, and antioxidant(s), preferably antioxidant(s) and UV-stabilizer(s), among component (G) is preferably contained in the polymer composition in an amount of from 0.05 to 2.50 wt%, more preferably of from 0.10 to 1.50 wt%, most preferably of from 0.15 to 0.60 wt%. Such additives and their contents, which are further specified in detail below, ensure favorable stability of the polymer composition in its designated application.

The HFFR PCR-derived polymer composition may optionally comprise of from 0.00 to 7.00 wt% of other ingredients as compound (H). It is preferred that the optional component(s) (H), if contained, is contained in the polymer composition in an amount of from 0.01 to 5.00 wt%, more preferably of from 0.01 to 2.50 wt%, even more preferably of from 0.01 to 1.50 wt%, most preferably of from 0.02 to 1.00 wt%. Such optional ingredients are not necessary to attain the technical effects of the present invention, but may fine-tune certain characteristics in case of individual need and may therefore be added under the premise not to impair with attaining the technical effects of the present invention. Preferred ingredients as compound (H) are described in more detail below and especially include antistatic agents, slip agents and acid scavengers.

The HFFR PCR-derived polymer composition can be prepared by mixing together the above respective components using any suitable means such as conventional compounding, mixing or blending apparatus, e.g. Banbury® mixer, a 2-roll rubber mill, Buss-co-kneader, a single screw extruder with special mixing segments or a twin screw extruder. Generally, the composition will be prepared by blending them together at a temperature, which is sufficiently high to soften the polymer components. The HFFR PCR-derived polymer recovered from e.g. the extruder can be in the form of pellets or in a powdery state.

The HFFR PCR-derived polymer composition is preferably characterized in that the polymer composition has

- a tensile strength (ISO 527-2/5A) of from 8.0 to 20.0 MPa, preferably of from 10.0 to 16.0 MPa, more preferably of from 11.0 to 14.0 MPa, and an elongation at break (ISO 527-2/5A) of from 240.0 to 550.0%, preferably of from 255.0 to 495.0%, more preferably of from 270.0 to 455.0%, even more preferably of from 280.0 to 420.0%, most preferably of from 285.0 to 350.0%; and/or
- a melt flow rate $MFR_5$ of (190°C, 5 kg, ISO 1133) of from 0.8 to 5.0 g/10min, preferably of from 1.0 to 4.0 g/10min, more preferably of from 1.2 to 3.0 g/10min, most preferably of from 1.5 to 2.5 g/10min, and/or
- a dripping of from 0.02 to 0.75%, preferably of from 0.04 to 0.50%, more preferably of from 0.06 to 0.25%, most preferably of from 0.06 to 0.15%, and/or
- an impact strength (0°C, Charpy notched ISO 179-1) of from 90.0 to 125.0 $kJ/m^2$, preferably of from 100.0 to 120.0 $kJ/m^2$, more preferably of from 101.5 to 115.0 $kJ/m^2$, most preferably 103.0 to 110.0 $kJ/m^2$ and an impact strength (-20°C, Charpy notched ISO 179-1) of from 95.0 to 135.0 $kJ/m^2$, preferably of from 105.0 to 130.0 $kJ/m^2$, more preferably of from 107.0 to 120.0 $kJ/m^2$, most preferably of from 110.0 to 118.0 $kJ/m^2$, and/or
- a flexural modulus FM (ISO 178) of from 580 to 750 MPa, preferably of from 610 to 730 MPa, more preferably of from 635 to 720 MPa, even more preferably of from 640 to 715 MPa, most preferably of from 660 to 710 MPa.

That is, the HFFR PCR-derived polymer composition of the present invention preferably contains the above components (A) to (H) such that these properties are satisfied and contains no other components, which impair with attaining these properties and the essential characteristics of the present invention, such as being halogen free and fulfilling all required flame retardant (jacketing) key properties.

Needless to say that each of the above properties (i.e. tensile strength, elongation at break, MFRs, dripping, impact strength, FM) may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

Having said that, it is apparent that the HFFR PCR-derived polymer composition preferably has

- a tensile strength (ISO 527-2/5A) of from 8.0 to 20.0 MPa, preferably of from 10.0 to 16.0 MPa, more preferably of from 11.0 to 14.0 MPa, and an elongation at break (ISO 527-2/5A) of from 240.0 to 550.0%, preferably of from 255.0 to 495.0%, more preferably of from 270.0 to 455.0%, even more preferably of from 280.0 to 420.0%, most preferably of from 285.0 to 350.0%; and
- a melt flow rate $MFR_5$ of (190°C, 5 kg, ISO 1133) of from 0.8 to 5.0 g/10min, preferably of from 1.0 to 4.0 g/10min, more preferably of from 1.2 to 3.0 g/10min, most preferably of from 1.5 to 2.5 g/10min, and
- a dripping of from 0.02 to 0.75%, preferably of from 0.04 to 0.50%, more preferably of from 0.06 to 0.25%, most preferably of from 0.06 to 0.15%, and
- an impact strength (0°C, Charpy notched ISO 179-1) of from 90.0 to 125.0 $kJ/m^2$, preferably of from 100.0 to 120.0 $kJ/m^2$, more preferably of from 101.5 to 115.0 $kJ/m^2$, most preferably 103.0 to 110.0 $kJ/m^2$ and an impact strength (-20°C, Charpy notched ISO 179-1) of from 95.0 to 135.0 $kJ/m^2$, preferably of from 105.0 to 130.0 $kJ/m^2$, more preferably of from 107.0 to 120.0 $kJ/m^2$, most preferably of from 110.0 to 118.0 $kJ/m^2$, and
- a flexural modulus FM (ISO 178) of from 580 to 750 MPa, preferably of from 610 to 730 MPa, more preferably of from 635 to 720 MPa, even more preferably of from 640 to 715 MPa, most preferably of from 660 to 710 M Pa;

more preferably has

- a tensile strength (ISO 527-2/5A) of from 10.0 to 16.0 MPa, preferably of from 11.0 to 14.0 MPa, and an elongation at break (ISO 527-2/5A) of from 255.0 to 495.0%, preferably of from 270.0 to 455.0%, more preferably of from 280.0 to 420.0%, most preferably of from 285.0 to 350.0%; and
- a melt flow rate $MFR_5$ of (190°C, 5 kg, ISO 1133) of from 1.0 to 4.0 g/10min, preferably of from 1.2 to 3.0 g/10min, more preferably of from 1.5 to 2.5 g/10min, and

- a dripping of from 0.04 to 0.50%, preferably of from 0.06 to 0.25%, more preferably of from 0.06 to 0.15%, and
- an impact strength (0°C, Charpy notched ISO 179-1) of from 100.0 to 120.0 kJ/m$^2$, preferably of from 101.5 to 115.0 kJ/m$^2$, more preferably 103.0 to 110.0 kJ/m$^2$ and an impact strength (-20°C, Charpy notched ISO 179-1) of from 105.0 to 130.0 kJ/m$^2$, preferably of from 107.0 to 120.0 kJ/m$^2$, more preferably of from 110.0 to 118.0 kJ/m$^2$, and
- a flexural modulus FM (ISO 178) of from 610 to 730 MPa, preferably of from 635 to 720 MPa, more preferably of from 640 to 715 MPa, most preferably of from 660 to 710 MPa;

and most preferably has

- a tensile strength (ISO 527-2/5A) of from 11.0 to 14.0 MPa, and an elongation at break (ISO 527-2/5A) of from 270.0 to 455.0%, preferably of from 280.0 to 420.0%, more preferably of from 285.0 to 350.0%; and
- a melt flow rate MFR$_5$ of (190°C, 5 kg, ISO 1133) of from 1.2 to 3.0 g/10min, preferably of from 1.5 to 2.5 g/10min, and
- a dripping of from 0.06 to 0.25%, preferably of from 0.06 to 0.15%, and
- an impact strength (0°C, Charpy notched ISO 179-1) of from 101.5 to 115.0 kJ/m$^2$, preferably 103.0 to 110.0 kJ/m$^2$ and an impact strength (-20°C, Charpy notched ISO 179-1) of from 107.0 to 120.0 kJ/m$^2$, preferably of from 110.0 to 118.0 kJ/m$^2$, and
- a flexural modulus FM (ISO 178) of from 635 to 720 MPa, preferably of from 640 to 715 MPa, more preferably of from 660 to 710 MPa.

## Component (A)

The HFFR PCR-derived polymer composition of the present invention essentially contains thermoplastic PCR polymer as component (A). The thermoplastic PCR polymer is comprised of a high density polyethylene (HDPE) polymer and having a melt flow rate MFR$_2$ (190°C, 2.16 kg, ISO 1133) of from 0.10 to 0.80 g/10min and a density (ASTM D792) of from 0.940 to 0.980 g/cm$^3$.

The post-consumer recycled (PCR) polymer is an essential component that helps to impart the desired mechanical properties to the HFFR PCR-derived polymer composition and to reduce environmental impact by reusing plastic waste stream products and being itself recyclable by being a thermoplastic material. The use thereof allows attaining good processability, appearance and safety. Surprisingly, the replacement of virgin HDPE polymer by the thermoplastic PCR polymer can even improve the fire retardant characteristics of a HFFR polymer composition, especially in terms of dripping, and can improve the mechanical properties, especially in terms of impact strength both at -20 and 0°C and elongation at break considered optimal for a cable material.

Thus, according to the present invention, waste plastics (post-consumer recyclate (PCR)), may originate from conventional collecting systems such as those implemented in the European Union, can be turned into resources for new plastic products, so that environmental and economic aspects can be combined in recycling and reusing waste plastics material.

The post-consumer recycled (PCR) polymer according to the present invention is comprised of high density polyethylene (HDPE) polymer, which means that the (PCR) polymer is a blend essentially consisting of high density polyethylene (HDPE) polymer, the high density polyethylene (HDPE) polymer accounting for at least 85 wt%, preferably at least 90 wt%, more preferably at least 95 wt%, even more preferably at least 98 wt%, and most preferably at least 99 wt% of the weight of the (PCR) polymer. The term "essentially consisting" herein means that other constituents, such as other polymeric material, fillers, stabilizers, additives, and impurities, as derived from the recycling stream may be present under the premise not to impair with the essential characteristics of the post-consumer recycled (PCR) polymer to have a melt flow rate MFR$_2$ (190°C, 2.16 kg, ISO 1133) of from 0.10 to 0.80 g/10min and a density (ASTM D792) of from 0.940 to 0.980 g/cm$^3$.

It is preferred that the (PCR) polymer has

a melt flow rate MFR$_2$ (190°C, 2.16 kg, ISO 1133) of from 0.15 to 0.65 g/10min, preferably of from 0.20 to 0.55 g/10min, more preferably of from 0.25 to 0.50 g/10min,

a density (ASTM D792) of from 0.945 to 0.975 g/cm$^3$, preferably of from 0.950 to 0.970 g/cm$^3$,

preferably a share thinning index SHI$_{2.7/210}$ (ISO 6721-1 and ISO 6721-10) of from 22.0 to 50.0, more preferably of from 25.0 to 45.0, most preferably of from 30.0 to 40.0,

preferably an impact strength (23°C, Charpy notched ISO 179-1) of from 20.0 to 60.0 kJ/m$^2$, more preferably of from 25.0 to 55.0 kJ/m$^2$, even more preferably of from 30.0 to 50.0 kJ/m$^2$, most preferably of from 32.0 to 45.0 kJ/m$^2$,

preferably a tensile strength (ISO 527-2/5A) of from 10.0 to 50.0 MPa, more preferably of from 15.0 to 40.0 MPa, most preferably of from 20.0 to 30.0 MPa, and

preferably an elongation at break (ISO 527-2/5A) of from 150.0 to 400.0%, more preferably of from 180.0 to 300.0%, most preferably of from 200.0 to 270.0%;

and more preferably the (PCR) polymer has

a melt flow rate $MFR_2$ (190°C, 2.16 kg, ISO 1133) of from 0.15 to 0.65 g/10min, preferably of from 0.20 to 0.55 g/10min, more preferably of from 0.25 to 0.50 g/10min,
a density (ASTM D792) of from 0.945 to 0.975 g/cm$^3$, preferably of from 0.950 to 0.970 g/cm$^3$,
a share thinning index $SHI_{2.7/210}$ (ISO 6721-1 and ISO 6721-10) of from 22.0 to 50.0, more preferably of from 25.0 to 45.0, most preferably of from 30.0 to 40.0,
an impact strength (23°C, Charpy notched ISO 179-1) of from 20.0 to 60.0 kJ/m$^2$, more preferably of from 25.0 to 55.0 kJ/m$^2$, more preferably of from 30.0 to 50.0 kJ/m$^2$, most preferably of from 32.0 to 45.0 kJ/m$^2$,
a tensile strength (ISO 527-2/5A) of from 10.0 to 50.0 MPa, more preferably of from 15.0 to 40.0 MPa, most preferably of from 20.0 to 30.0 MPa, and
an elongation at break (ISO 527-2/5A) of from 150.0 to 400.0%, more preferably of from 180.0 to 300.0%, most preferably of from 200.0 to 270.0%; and most preferably the (PCR) polymer has
a melt flow rate $MFR_2$ (190°C, 2.16 kg, ISO 1133) of from 0.20 to 0.55 g/10min, preferably of from 0.25 to 0.50 g/10min,
a density (ASTM D792) of from 0.945 to 0.975 g/cm$^3$, preferably of from 0.950 to 0.970 g/cm$^3$,
a share thinning index $SHI_{2.7/210}$ (ISO 6721-1 and ISO 6721-10) of from 25.0 to 45.0, more preferably of from 30.0 to 40.0,
an impact strength (23°C, Charpy notched ISO 179-1) of from 25.0 to 55.0 kJ/m$^2$, preferably of from 30.0 to 50.0 kJ/m$^2$, more preferably of from 32.0 to 45.0 kJ/m$^2$,
a tensile strength (ISO 527-2/5A) of from 15.0 to 40.0 MPa, preferably of from 20.0 to 30.0 MPa, and
an elongation at break (ISO 527-2/5A) of from 180.0 to 300.0%, preferably of from 200.0 to 270.0%.

Any post-consumer recycled (PCR) polymer can be used in the present invention as long as it is comprised of high density polyethylene (HDPE) polymer and satisfies the above essential characteristics in terms of $MFR_2$ and density, preferably it further satisfies the above characteristics in terms $SHI_{2.7/210}$, impact strength, tensile strength (ISO 527-2/5A) and/or an elongation at break.

The post-consumer recycled (PCR) polymer may be attained by a process as descried in PCT/EP2022/087 (filing date: 22/12/2022) and PCT/EP2023/056995 (filing date = 20/03/2023), which respective contents are herein included by way of reference. Such a process is typically a mechanical polyolefin (i.e. polyethylene) recycling process, comprising, in the given order, the steps of:

a) providing a precursor mixed plastic recycling stream (A);
b) sieving the precursor mixed plastic recycling stream (A) to create a sieved mixed plastic recycling stream (B) having only articles with a longest dimension in the range from 30 to 400 mm;
c) sorting the sieved mixed plastic recycling stream (B) by means of one or more optical sorters wherein the sieved mixed plastic recycling stream (B) is at least sorted by colour and optionally also by polyolefin type and/or article form, thereby generating (c-1) a single-colour sorted polyolefin recycling stream (C) or generating (c-2) one or more single-colour sorted polyolefin recycling stream(s) (C) and a mixed-colour sorted polyolefin recycling stream (CM), wherein each of the one or more single-colour sorted polyolefin recycling stream(s) (C) and the mixed-colour sorted polyolefin recycling stream (CM) are subjected separately to steps d) and beyond;
d) reducing the size of the pieces of the single-colour sorted polyolefin recycling stream (C or CM) to form a flaked polyolefin recycling stream (D);
e) washing the flaked polyolefin recycling stream (D) with a first aqueous washing solution (W1) without the input of thermal energy, thereby generating a first suspended polyolefin recycling stream (E);
f) removing at least part of the first aqueous washing solution (W1), preferably substantially all of the first aqueous washing solution (W1) from the first suspended polyolefin recycling stream (E) to obtain a first washed polyolefin recycling stream (F);
g) washing the first washed polyolefin recycling stream (F) with a second aqueous washing solution (W2) thereby generating a second suspended polyolefin recycling stream (G), wherein sufficient thermal energy is introduced to the second suspended polyolefin recycling stream (G) to provide a temperature in the range from 65 to 95 °C during the washing;
h) removing the second aqueous washing solution (W2) and any material not floating on the surface of the second aqueous washing solution from the second suspended polyolefin recycling stream (G) to obtain a second washed polyolefin recycling stream (H);
i) drying the second washed polyolefin recycling stream (H), thereby obtaining a dried polyolefin recycling stream (I);
j) optionally separating the dried polyolefin recycling stream (I) into a light fraction and a heavy fraction polyolefin recycling stream (J);
k) further sorting the heavy fraction polyolefin recycling stream (J) or, in the case that step j) is absent, the dried polyolefin recycling stream (I) by means of one or more optical sorters sorting for one or more target polyolefins by removing any flakes containing material other than the one or more target polyolefins, yielding a purified polyolefin recycling stream (K);

l) optionally melt extruding, preferably pelletizing, the purified polyolefin recycling stream (K), preferably wherein additives (Ad) are added in the melt state, to form an extruded, preferably pelletized, recycled polyolefin product (L); and

m) optionally aerating the recycled polyolefin product (L) or, in the case that step I) is absent, the purified polyolefin recycling stream (K) to remove volatile organic compounds, thereby generating an aerated recycled polyolefin product (M), being either an aerated extruded, preferably pelletized, recycled polyolefin product (M1) or aerated recycled polyolefin flakes (M2),

wherein the order of steps I) and m) can be interchanged, such that the purified polyolefin recycling stream (K) is first aerated to form aerated recycled polyolefin flakes (M2) that are subsequently extruded, preferably wherein additives (Ad) are added in the melt state, to form an extruded, preferably pelletized, aerated recycled polyolefin product (M3).

The optical sorters of step c) may sort via a method selected from the group consisting of camera systems (operating in the visible range of the EM-spectrum), visible reflectance spectroscopy, near-IR spectroscopic analysis, mid-IR spectroscopic analysis, high-speed laser spectroscopic analysis, Raman spectroscopic analysis, and Fourier-transform infrared (FT-IR) spectroscopic analysis.

The shredding of step d) may be a wet shredding process, wherein the sorted polyolefin recycling stream (C) is first contacted with an aqueous solution (W0) to provide a suspended sorted polyolefin recycling stream, which is thereafter subjected to shredding.

The second aqueous washing solution (W2) may be an alkaline aqueous washing solution, preferably an aqueous solution of a base selected from the group consisting of calcium hydroxide, potassium hydroxide, magnesium hydroxide, lithium hydroxide, sodium bicarbonate, sodium hydroxide and mixtures thereof, preferably sodium hydroxide.

The alkaline aqueous solution may have a pH in the range from 9.0 to 14.0, preferably in the range from 12.0 to 14.0.

The amount of the base in the alkaline aqueous solution may be in the range from 0.05 to 10 wt.-%, more preferably in the range from 0.10 to 7.0 wt.-%, most preferably in the range from 0.50 to 5.0 wt.-%, relative to the total weight of the alkaline aqueous solution.

At least part of the aqueous washing solution (W2) removed in step h) may be recycled for use as the first aqueous washing solution (W1) and/or the aqueous solution (W0), if present.

The first aqueous washing solution (W1) and/or the aqueous solution (W0), if present may have a pH in the range from 8.0 to 14.0, preferably in the range from 12.0 to 14.0.

The single-colour sorted polyolefin recycling stream (C) may be a single-colour sorted polyethylene recycling stream.

Further details regarding e.g. each individual step and further measures for exemplary obtaining a suitable PCR polymer are provided in the referenced documents PCT/EP2022/087 (filing date: 22/12/2022) and PCT/EP2023/056995 (filing date = 20/03/2023) and being incorporated herein by way of reference.

**Component (B)**

The HFFR PCR-derived polymer composition of the present invention contains virgin high density polyethylene (HDPE) polymer as component (B). The virgin HDPE polymer is selected from the group consisting of component (B-1) and component (B-2) and mixtures thereof, wherein

component (B-1) is a natural virgin HDPE polymer having a melt flow rate $MFR_2$ (190°C, 2.16 kg, ISO 1133) of from 0.15 to 0.85 g/10min and a density (ASTM D792) of from 0.940 to 0.965 $g/cm^3$, and

component (B-2) is a virgin HDPE polymer, which is blended with carbon black in an amount of from 1.5 to 7.5 wt% with respect to component (B-2) and which has a melt flow rate $MFR_2$ (190°C, 2.16 kg, ISO 1133) of from 1.00 to 2.40 g/10min and a density (ASTM D792) of from 0.945 to 0.975 $g/cm^3$.

The HOPE polymer is a component that helps to impart the desired mechanical properties to the HFFR PCR-derived polymer composition and any virgin HDPE can be used in the present invention as long as the above essential characteristics are fulfilled.

The component (B-1) is preferably a natural virgin HDPE polymer having a melt flow rate $MFR_2$ (190°C, 2.16 kg, ISO 1133) of from 0.20 to 0.75 g/10min, more preferably of from 0.35 to 0.65 g/10min, and a density (ASTM D792) of from 0.940 to 0.960 $g/cm^3$, more preferably of from 0.942 to 0.955 $g/cm^3$.

Virgin HOPE polymer and its manufacturing are common knowledge. It may be an ethylene homopolymer or an ethylene copolymer, wherein the other copolymerizable monomer(s) include for instance C3-10-alpha olefins such as propene, 1-butene, 1-hexene, and 1-octene. The use of 1-hexene, 1-octene and 1-butene, or mixtures thereof, is preferred, especially 1-butene. Ideally, there is only one comonomer present. The HDPE is a hydrocarbon polymer made from ethylene and optionally a co-monomer (such as 1-butene or 1-hexene) using a catalytic method, commonly at low pressures using Ziegler-Natta catalyst, single site (metallocene) catalysts or activated chromium oxide (known as a Phillips catalyst). The polymerization of the virgin HDPE by be effected in one or more, e.g. 1, 2 or 3, polymerization reactors, using conventional polymerization techniques, e.g. gas phase, solution phase, slurry or bulk polymerization. A combination of slurry (or bulk) and at least one gas phase reactor (GPR) may be preferred, particularly with the reactor sequence (cascade) in the order of a slurry (or bulk) reactor and one or more, more preferably one, gas GPR, optionally preferably with a pre-polymerization reactor prior to the slurry (or bulk) reactor. That is, the HOPE polymer may be obtained in a single step polymerization process or may preferably be prepared in a sequence of at least two (most preferably two) polymerization reactors (so-called reactor-blending).

The virgin HDPE polymer is preferably a multimodal (e.g. bimodal or trimodal) HDPE polymer which can be made by mechanical blending two or more, separately prepared polymer components or, more preferably, by in-situ blending in a multistage polymerization process. Both mechanical and in-situ blending is well known in the field and a preferred polymerization technology based on loop reactor - gas phase reactor system for reactor-blending has been developed by Borealis AG and is commonly known as BORSTAR technology. The term "multimodal" means herein multimodality at least with respect to melt flow rate MFR (e.g. $MFR_2$) of the HOPE polymer components, i.e. the multiple components have different MFR values. That is, the components have been produced under different polymerization conditions resulting in different MFR values. However, "multimodal" can further mean multimodality with respect to one or more further properties between the polymer components, such as e.g. density, Mw, etc..

The virgin HDPE polymer is preferably a copolymer of ethylene and 1-butene and is more preferably a bimodal HOPE polymer.

The virgin HDPE polymer may be used as commercially available, as supplied by various commercial sources, such as Dow, Mitsubishi, LG Chem, Lyondellbasell, ExxonMobil™ and Borealis AG (such as HE6063).

Further, the virgin HDPE polymer (component (B)) may preferably be a virgin HDPE polymer (component (B-2)), which is blended with carbon black in an amount of from 1.5 to 7.5 wt% with respect to component (B-2). The dispersed carbon black improves thermal stability and weathering resistance excellent.

More preferably, the component (B-2) is a virgin HDPE polymer, which is blended with carbon black in an amount of from 1.8 to 7.5 wt%, preferably of from 2.0 to 7.0 wt%, with respect to component (B-2) and which has

a melt flow rate $MFR_2$ (190°C, 2.16 kg, ISO 1133) of from 1.20 to 2.20 g/10min, preferably of from 1.45 to 2.10 g/10min, most preferably of from 1.55 to 1.95 g/10min, and
a density (ASTM D792) of from 0.945 to 0.970 g/cm$^3$, preferably of from 0.950 to 0.965 g/cm$^3$, and
preferably being a copolymer of ethylene and 1-butene, more preferably a bimodal HOPE polymer.

The component (B-2) may be obtained by blending a virgin HDPE polymer (such as the one described with respect to component (B-1)) with carbon black by conventional means. The carbon black is preferably well-dispersed. Any conventional carbon black may be used as applied in the technical field of the present invention, such as carbon black as described in more detail below.

A virgin HDPE polymer blended with carbon black may be used as commercially available, such as supplied by Borealis AG (such as HE6067).

**Component (C)**

The HFFR PCR-derived polymer composition of the present invention contains ethylene butyl acrylate (EBA) copolymer as component (C). The ethylene butyl acrylate (EBA) copolymer has a butyl acrylate content of from 7.0 to 19.0 wt%, a $MFR_2$ (190°C, 2.16 kg, ISO 1133) of from 0.20 to 4.7 g/10min and a density (ASTM D792) of from 0.850 to 0.995 g/cm$^3$.

Together with component (D) and component (E), the ethylene butyl acrylate (EBA) copolymer is an essential component to provide the desired flame retardant properties, facilitates the compounding of the inorganic fire retardant compound (E) in the polymer composition and acts as a water tree retardant due to its polarity.

The component (C) is preferably an ethylene butyl acrylate (EBA) copolymer having a butyl acrylate content of from 7.5 to 17.0 wt%, more preferably of from 8.0 to 16.0 wt%, a $MFR_2$ (190°C, 2.16 kg, ISO 1133) of from 0.25 to 2.0 g/10min, more preferably of from 0.30 to 1.0 g/10min, most preferably of from 0.30 to 0.60 g/10min, and a density (ASTM D792) of from 0.875 to 0.975 g/cm$^3$, more preferably of from 0.900 to 0.955 g/cm$^3$, most preferably of from 0.910 to 0.945 g/cm$^3$.

Ethylene butyl acrylate (EBA) and its manufacturing are common knowledge. Alternatively, commercially available ethylene butyl acrylate (EBA) can also be used, as supplied by various commercial sources, such as Dow (e.g. ELVALOY™ series), Lucobit AG (e.g. Lucofin® 1400HN), and ExxonMobil (Exxtral™ series).

**Component (D)**

The HFFR PCR-derived polymer composition of the present invention contains silicon fluid and/or silicon gum as component (D).

Together with component (C) and component (E), the silicon fluid and/or silicon gum is an essential component to provide the desired flame retardant properties. More specifically, the silicon fluid and/or silicon gum represents a suitable environmental friendly fire retardant additive imparting suitable fire retardancy by being used at the contents as specified herein.

According to a preferred embodiment of the present invention, the silicone fluid or silicone gum is selected from the group consisting of polysiloxane, preferably polydimethylsiloxane, and siloxanes containing alkoxy or alkyl functional groups and mixtures thereof.

According to a preferred embodiment of the present invention, component (D) is an organopolysiloxane polymer comprising chemically combined siloxy units. Preferably, the siloxy units are selected from the group consisting of $R_3SiO_{0.5}$, $R_2SiO$, $R^1SiO_{1.5}$, $R^1R^2SiO_{0.5}$, $RR^1SiO$, $R^1_2SiO$, $RSiO_{1.5}$ and $SiO_2$ units and mixtures thereof in which each R represents independently a saturated or unsaturated monovalent hydrocarbon substituent, and each $R^1$ represents a substituent such as R or a substituent selected from the group consisting of a hydrogen atom, hydroxyl, alkoxy, aryl, vinyl or allyl groups.

The silicon fluid and/or silicon gum may be used as commercially available and in the form of a masterbatch in which case the content of the masterbatch is calculated as the content of component (D). Suitable commercially available silicone fluids and/or a silicon gums, which can be used as component (D), are e.g. Tegomer® 6264 from Evonik Nutrition & Care GmbH, AMB-12235 MASTERBATCH from DuPont as DOW CORNING™ or FR4897 from Borealis AG.

**Component (E)**

The HFFR PCR-derived polymer composition of the present invention contains calcium and/or magnesium carbonate as component (E).

Together with component (C) and component (D), the calcium and/or magnesium carbonate is an essential component to provide the desired flame retardant properties. More specifically, the calcium and/or magnesium carbonate represents a suitable fire retardant inorganic filler, which can impart fire retardancy even if used at the low contents as specified herein.

Examples are calcium carbonate, magnesium carbonate, and huntite $2[Mg_3Ca(CO_3)_4]$. The calcium and/or magnesium carbonate may contain small amounts of a hydroxide typically less than 5 wt% of the filler, suitably less than 3 wt%. For example, there may be small amounts of magnesium hydroxide or magnesium oxide. Suitably is the filler not a substantially hydrated compound, it can contain small amounts of water, usually less than 3 wt%, suitably less than 1.0 wt%. The calcium and/or magnesium carbonate may be surface treated with e.g. a carboxylic acid or salt to aid processing and provide better dispersion of in the HFFR PCR-derived polymer composition.

Preferably, the metal carbonate filler used in the flame retardant composition according to the present invention comprises at least 50 wt% of calcium carbonate. More preferably, it is calcium carbonate.

The calcium and/or magnesium carbonate filler can have a particle size (d50) of less than 50 μm, preferably less than 5 μm and most preferably of from 1.0 to 2.8 μm. These ranges ensure suitable dispersion of the calcium and/or magnesium carbonate filler in the HFFR PCR-derived polymer composition.

Suitable commercially available products are e.g. calcium carbonate Microsöhl 40 (Vereinigte Kreidewerke Damman KG) and OMYA EXH 1SP ($CaCO_3$ with a particle size d50 of 1.4 μm, distributed by Omya).

**Component (F)**

The HFFR PCR-derived polymer composition of the present invention contains carbon black as component (F).

The carbon black adds further flame retardant properties (in addition to components (C) to (E)), provides thermal stability and coloring, and ensures to attain excellent weathering resistance by being used at the contents as specified herein.

The carbon black is not specifically limited and all carbon blacks conventionally designated as e.g. furnace blacks, especially those known as SAF, ISAF, and HAF blacks, channel blacks, and thermal blacks can be used in the HFFR PCR-derived polymer composition of the present invention, and commercially available carbon black commonly applied in the polymer industry especially those used for cable cladding can be used.

In order to ensure good dispersion of the carbon black in the HFFR PCR-derived polymer composition, the carbon black is preferably nano-sized, e.g. the carbon black preferably has a particle size (d50) of less than 1 μm, more preferably less than 500 nm, more preferably of less than 200 nm, more preferably less than 100 nm, more preferably of from 1.0 to 75 nm, and most preferably of from 5.0 to 40 nm. Carbon black nanoparticles are preferred since they possess the ability to trap free radical and are therefore suitably used to block degradation of polymers.

The carbon black can be incorporated into the polymer composition in its pure form or in the form of a masterbatch (CBMB) in which case the content of the masterbatch is calculated as the content of component (F). CBMB includes carbon black in a carrier (polymer), usually at least 40 wt%, preferably at least 50 wt%, more preferably at least 75 wt% carbon black. CBMB is commercially available on the market or can be produced, for example, through traditional mixing processes. Carbon black is easy to handle in the form of CBMB and is suitably added to the components of the HFFR PCR-derived polymer composition of the present invention.

The carbon black or CBMB may be used as commercially available and suitable commercially available products, which can be used as component (F), are obtainable from Cabot, Evonic or Columbian and others and include for instance Carbon Black (CB) (N550) from Cabot Corporation and ELFTEX® 254 from Cabot.

**Component (G)**

The HFFR PCR-derived polymer composition of the present invention contains additive(s) selected from group consisting of antioxidant(s), UV-stabilizer(s), and metal deactivator(s) and mixtures thereof as component (G). In the present invention, two or more functions can be combined in the same molecule, which may be preferred to reduce the overall amount of additives.

Antioxidants interrupt the degradation processes in different ways. The two major classifications are chain terminating primary antioxidants and hydroperoxide decomposing secondary antioxidants. Primary antioxidants react rapidly with free radicals and are also called "radical scavengers". Primary antioxidants are typically given by sterically hindered phenols, whereas secondary antioxidants include e.g. phosphites and thioesters. The latter are particularly useful in synergistic combinations with primary antioxidants.

Irgafos® 168, Irgafos® 126, Irganox® PS 800 and Irganox® PS 802 are exemplary secondary antioxidants. Moreover, in multifunctional stabilizers, several functions can be combined in the same molecule, and a widely used combination are sterically hindered phenols with sulfur substituents or sterically hindered phenols with copper chelating function (metal deactivators), such as Irganox® 1035, Irganox® 565, Irganox® 1520 L, Irganox® MD 1024.

Further examples of antioxidants are sterically hindered phenols (such as CAS No. 6683-19-8, e.g. Irganox 1010 (FF)™ by BASF), phosphorous based antioxidants (such as CAS No. 31570-04-4, also sold as Flostanox PAR 24 (FF)™ by Clariant, or Irgafos 168 (FF)™ by BASF), sulphur based antioxidants (such as CAS No. 693-36-7, sold as Irganox PS-802 (FF)™ by BASF), nitrogen-based antioxidants (such as 4,4'-bis(1,T-dimethylbenzyl)diphenylamine), or antioxidant blends.

Examples of UV-stabilizers include, for example, ultraviolet light absorbers (UVA) and hindered-amine light stabilizers (HALS). Specific examples include bis-(2,2,6,6-tetramethyl-4-piperidyl)sebacate (CAS No. 52829-07-9, Tinuvin 770) and 2-hydroxy-4-n-octoxy-benzophenone (CAS No. 1843-05-6, Chimassorb 81). Also antioxidant(s) may additionally offer UV-stabilizing effect and can therefore be preferably used, such as e.g. pentaerythritol tetrakis [3-[3,5-di-tert-butyl-4-hydroxyphenyl] propionate (CAS-No. 6683-19-8, Irganox 1010).

Metals, present as impurity within PCR polymer, can accelerate thermal oxidation of polymer. To prevent metal catalyzed degradation, it is preferable to combine an antioxidant with a metal deactivator if the former does not already contain a moiety with radical scavenging properties (i.e. provides both functions).

The function of a metal deactivator is to form an inactive complex with the catalytically active metal ion. Thus, complexation of the metal with the chelating agent prevents metals from associating with hydro-peroxides, i.e., it decreases its ability to produce radicals from hydroperoxides by oxidation or reduction. Common metal deactivators include hydrazine-based compounds, such as e.g. oxalyl bis(benzylidene)hydrazine, N'1,N'12-Bis(2-hydroxybenzoyl) dodecanedihydrazide, N,N'-Bis[3-(3,5-di-tert-butyl-4-hydroxyphenyl)propionyl]hydrazine, (2-Hydroxy-N-1H-1,2,4-triazol-3-ylbenzamide, N,N'-(disalicylidene)-1,2-propanediamine, and various thiadiazole and triazole derivatives, e.g. 2-hydroxy-N-1H-1,2,4-triazol-3-ylbenzamide, such as of the ADK STAB CDA series (from Adeka), Irganox® 1035, Irganox® 565, Irganox® 1520 L, Irganox® MD 1024.

Therefore, the component (G) preferably includes at least antioxidant(s) and metal deactivator(s), wherein the functions can preferably be combined in the same molecule, and the antioxidant(s) preferably include phenolic-type antioxidant(s), and the metal deactivator(s) preferably include hydrazine-based metal deactivator(s).

The use of compound(s) combining the function of an antioxidant and a metal deactivator, such as Irganox® 1035, Irganox® 565, Irganox® 1520 L, Irganox® MD 1024, especially Irganox® MD 1024 or ADK STAB CDA-10, and the, preferably combined, use of compound(s) combining the function of an antioxidant and a UV-stabilizer, especially Irganox® 1010, is particularly preferable.

**Component (H)**

The HFFR PCR-derived polymer composition of the invention may optionally comprise one or more additional component(s) (H) (compounds and additives other than above components), such as e.g. antistatic agents, slip agents, acid scavengers, lubricants, utilization agents, polymer additives, fillers, nucleating agents, coloring agents, anti-block agents, processing aids, and modifiers commonly known in the art. The components are not specially limited and commonly used components may be used including those being commercially available. However, no optional component(s) (H) may be added in addition to the essential components of the present invention, which interfere with attaining the properties of the HFFR PCR-derived polymer composition.

The component(s) (H), if contained, preferably comprise at least one selected from the group consisting of antistatic agents, slip agents and acid scavengers.

Slip agents migrate to the surface and act as lubricants e.g. polymer to polymer and polymer against metal (e.g. mold, rollers etc.), giving reduced coefficient of friction (CoF) as a result. Examples are monoglyceride-based compounds (CAS No. 31566-31-1), fatty acid amids, like erucamide (CAS No. 112-84-5), oleamide (CAS No. 301-02-0), stearamide (CAS No. 124-26-5) or combinations thereof.

Antistatic agents can be ionic or nonionic. Ionic antistatic agents include cationic compounds, such as quaternary ammonium, phosphonium, or sulfonium salts, and anionic compounds, usually sodium salts of sulfonates, phosphates, and carboxylic acids. Nonionic antistatic agents include esters, such as glycerol esters of fatty acids, and ethoxylated tertiary amines. Suitable antistatic agents are, for example, monoglyceride-based compounds (CAS No. 31566-31-1), glycerol esters (CAS No. 97593-29- 8) or ethoxylated amines (CAS No. 71786-60-2 or 61791-31-9) or ethoxylated amides (CAS No. 204-393-1).

Preferably, by combining the functions of a slip agent and of an anti-static agent, are monoglyceride-based compounds (CAS No. 31566-31-1, e.g. DIMODAN® HP (IFF's Nutrition & Biosciences, distilled monoglyceride made from edible, fully hydrogenated palm based oil).

Therefore, the additive(s) (H) preferably include antistatic agent(s), wherein the antistatic agent(s) is present in an amount of 0.07 to 2.00 wt%, preferably 0.10 to 1.50 wt%, more preferably 0.15 to 1.0 wt%, most preferably 0.20 to 0.60 wt% based on the HFFR PCR-derived polymer composition, and wherein the antistatic agent(s) preferably includes, more preferably is, a monoglyceride-based antistatic agent(s). In case of using the above monoglyceride-based compound (e.g. CAS No. 31566-31-1), said antistatic agent already includes the function of a slip agent, which is preferred.

Acid scavengers are used to deactivate catalyst and acid residues and thus protect the polymer from unwanted degradation reactions being catalyzed by the presence of acidic species. While typical oxidation reactions can be handled by antioxidants (see above), dedicated acid scavengers can be present in parallel, which may be preferred.

Examples of acid scavengers include calcium stearates (e.g. CAS No. 1592-23-0), sodium stearates (e.g. CAS-No. 822-16-2), zinc stearates (e.g. CAS No. 557-05-1), magnesium and zinc oxides, synthetic hydrotalcite (e.g. SHT, CAS No. 11097-59-9), lactates and lactylates. Preferably, by combining the functions of acid scavengers and slip agents (lubricating properties) are sodium stearates (e.g. CAS-No. 822-16-2).

Therefore, the additive(s) (H) preferably include acid scavenger(s), wherein the acid scavenger(s) is preferably present in an amount of 0.005 to 0.100 wt%, more preferably 0.008 to 0.090 wt%, more preferably 0.010 to 0.070 wt%, most preferably 0.025 to 0.050 wt% based on the HFFR PCR-derived polymer composition, and wherein the acid scavenger(s) preferably includes, more preferably is, sodium stearates. In case of using the sodium stearates (e.g. CAS-No. 822-16-2), said acid scavenger already includes the function of a slip agent, which is preferred.

Thus, taken all together and applying the above general principles, it is apparent that the above described embodiments and/or preferred embodiments preferably combine to a halogen-free flame retardant (HFFR) post-consumer recycled (PCR)-derived polymer composition, which comprises, based on the overall weight of the polymer composition

(A) of from 20.0 to 38.0 wt%, preferably of from 23.0 to 37.0% of the thermoplastic PCR polymer comprised of high density polyethylene (HDPE) polymer and having

a melt flow rate $MFR_2$ (190°C, 2.16 kg, ISO 1133) of from 0.20 to 0.55 g/10min, preferably of from 0.25 to 0.50 g/10min,
a density (ASTM D792) of from 0.945 to 0.975 g/cm$^3$, preferably of from 0.950 to 0.970 g/cm$^3$,
a share thinning index $SHI_{2.7/210}$ (ISO 6721-1 and ISO 6721-10) of from 25.0 to 45.0, preferably of from 30.0 to 40.0,
an impact strength (23°C, Charpy notched ISO 179-1) of from 25.0 to 55.0 kJ/m$^2$, preferably of from 30.0 to 50.0 kJ/m$^2$, more preferably of from 32.0 to 45.0 kJ/m$^2$,
a tensile strength (ISO 527-2/5A) of from 15.0 to 40.0 MPa, preferably of from 20.0 to 30.0 MPa, and
an elongation at break (ISO 527-2/5A) of from 180.0 to 300.0%, preferably of from 200.0 to 270.0%;

(B) of from 0.0 to 20.0 wt%, preferably 1.0 to 16.5 wt%, more preferably of from 2.0 to 13.0 wt%, even more preferably of from 2.5 to 8.0 wt%, most preferably 4.0 to 7.5 wt% of virgin HDPE polymer selected from the group consisting of the component (B-1) and the component (B-2) and mixtures thereof, and wherein the component (B) is preferably the component (B-2), wherein

the component (B-1) is a natural virgin HDPE polymer having a melt flow rate $MFR_2$ (190°C, 2.16 kg, ISO 1133) of from 0.20 to 0.75 g/10min, preferably of from 0.35 to 0.65 g/10min, and a density (ASTM D792) of from 0.940 to 0.960 g/cm$^3$, preferably of from 0.942 to 0.955 g/cm$^3$, and which is preferably a copolymer of ethylene and 1-butene, more preferably a bimodal HOPE polymer, and

component (B-2) is a virgin HDPE polymer, which is blended with carbon black in an amount of from 1.8 to 7.5 wt%, preferably of from 2.0 to 7.0 wt%, with respect to component (B-2) and which has a melt flow rate $MFR_2$ (190°C, 2.16 kg, ISO 1133) of from 1.45 to 2.10 g/10min, preferably of from 1.55 to 1.95 g/10min and a density (ASTM D792) of from 0.945 to 0.970 g/cm$^3$, preferably of from 0.950 to 0.965 g/cm$^3$, and which is preferably a copolymer of ethylene and 1-butene, more preferably a bimodal HOPE polymer;

(C) of from 16.5 to 23.5 wt%, preferably of from 17.5 to 22.5 wt%, more preferably of from 18.0 to 21.5 wt% of ethylene butyl acrylate (EBA) copolymer having a butyl acrylate content of from 7.5 to 17.0 wt%, preferably of from 8.0 to 16.0 wt%, a $MFR_2$ (190°C, 2.16 kg, ISO 1133) of from 0.25 to 2.0 g/10min, preferably of from 0.30 to 1.0 g/10min, most preferably of from 0.30 to 0.60 g/10min, and a density (ASTM D792) of from 0.900 to 0.955 g/cm$^3$, preferably of from 0.910 to 0.945 g/cm$^3$;

(D) of from 3.0 to 9.0 wt%, preferably of from 5.0 to 8.5 wt% of silicon gum;

(E) of from 24.0 to 38.0 wt%, preferably of from 25.0 to 35.0 wt% of calcium carbonate;

(F) of from 3.0 to 9.0 wt%, preferably of from 5.0 to 8.5 wt% of the carbon black;

(G) of from 0.10 to 2.50 wt%, preferably of from 0.20 to 1.50 wt% of the additive(s) at least comprising antioxidant(s) including phenolic-type antioxidant(s) and metal deactivator(s) including hydrazine-based metal deactivator(s) and mixtures thereof, wherein the functions can be combined in the same molecule; and

(H) of from 0.00 to 2.50 wt%, preferably of from 0.01 to 1.50 wt%, more preferably 0.01 to 1.00 wt% of other ingredients including at least one selected from the group consisting of antistatic agents, acid scavengers, slip agents, lubricants, utilization agents, polymer additives, fillers, nucleating agents, coloring agents, anti-block agents, and processing aids,

wherein the sum of components (A), optional (B), (C) to (G) and optional (H) add up to 100 wt%,

wherein the weight ratio of component (A) to component (B), if present, is in the range from 1.1 to 25.0, preferably in the range from 1.2 to 15.0 and more preferably in the range from 2.0 to 9.0,

wherein the weight ratio of component (A) to component (C) is in the range from 0.9 to 2.2, preferably in the range from 1.0 to 2.0, more preferably in the range from 1.2 to 1.7, and

wherein the polymer composition has

a tensile strength (ISO 527-2/5A) of from 11.0 to 14.0 MPa, and an elongation at break (ISO 527-2/5A) of from 255.0 to 455.0%, preferably of from 280.0 to 420.0%,

a dripping (determined according to the description) of from 0.06 to 0.25%, preferably of from 0.06 to 0.15%,

an impact strength (0°C, Charpy notched ISO 179-1) of from 100.0 to 120.0 kJ/m$^2$, preferably 103.0 to 110.0 kJ/m$^2$ and an impact strength (-20°C, Charpy notched ISO 179-1) of from 107.0 to 120.0 kJ/m$^2$, preferably of from 110.0 to 118.0 kJ/m$^2$, and

a flexural modulus FM (ISO 178) of from 635 to 715 MPa, preferably of from 660 to 710 MPa;

and more preferably combine to a HFFR PCR-derived polymer composition, which comprises, based on the overall weight of the polymer composition

(A) of from 23.0 to 37.0% of the thermoplastic PCR polymer comprised of high density polyethylene (HDPE) polymer and having

a melt flow rate $MFR_2$ (190°C, 2.16 kg, ISO 1133) of from 0.25 to 0.50 g/10min,

a density (ASTM D792) of from 0.950 to 0.970 g/cm$^3$,

a share thinning index $SHI_{2.7/210}$ (ISO 6721-1 and ISO 6721-10) of from 30.0 to 40.0,

an impact strength (23°C, Charpy notched ISO 179-1) of from 30.0 to 50.0 kJ/m$^2$, preferably of from 32.0 to 45.0 kJ/m$^2$,

a tensile strength (ISO 527-2/5A) of from 20.0 to 30 MPa, and

an elongation at break (ISO 527-2/5A) of from 180.0 to 300.0%, preferably of from 200.0 to 270.0%;

(B) of from 1.0 to 16.5 wt%, preferably of from 2.0 to 13.0 wt%, more preferably of from 2.5 to 8.0 wt% of virgin HDPE polymer represented by the component (B-2), which is a virgin HDPE polymer, which is blended with carbon black in an amount of from 2.0 to 7.5 wt%, preferably of from 2.0 to 7.0 wt%, with respect to component (B-2) and which has a melt flow rate $MFR_2$ (190°C, 2.16 kg, ISO 1133) of from 1.45 to 2.10 g/10min, preferably of from 1.55 to 1.95 g/10min and a density (ASTM D792) of from 0.945 to 0.970 g/cm$^3$, preferably of from 0.950 to 0.965 g/cm$^3$, and which is preferably a copolymer of ethylene and 1-butene, more preferably a bimodal HOPE polymer;

(C) of from 18.0 to 21.5 wt% of ethylene butyl acrylate (EBA) copolymer having a butyl acrylate content of from 8.0 to 16.0 wt%, a $MFR_2$ (190°C, 2.16 kg, ISO 1133) of from of from 0.30 to 1.0 g/10min, more preferably of from 0.30 to 0.60 g/10min, and a density (ASTM D792) of from 0.910 to 0.945 g/cm$^3$;

(D) of from 5.0 to 8.5 wt% of silicon gum;

(E) of from 25.0 to 35.0 wt% of calcium carbonate;

(F) of from 5.0 to 8.5 wt% of the carbon black;

(G) of from 0.20 to 1.50 wt% of the additive(s) at least comprising antioxidant(s) including phenolic-type antioxidant(s) and metal deactivator(s) including hydrazine-based metal deactivator(s) and mixtures thereof, wherein the functions can be combined in the same molecule; and

(H) of from 0.01 to 1.50 wt%, preferably 0.01 to 1.00 wt% of other ingredients including at least one selected from the group consisting of antistatic agents, acid scavengers, and slip agents,

wherein the sum of components (A), (B), (C) to (G) and (H) add up to 100 wt%, wherein the weight ratio of component (A) to component (B), is in the range from 1.2 to 15.0 and preferably in the range from 2.0 to 9.0, wherein the weight ratio of component (A) to component (C) is in the range from 1.0 to 2.0, preferably in the range from 1.2 to 1.7, and wherein the polymer composition has

a tensile strength (ISO 527-2/5A) of from 11.0 to 14.0 MPa, and an elongation at break (ISO 527-2/5A) of from 255.0 to 455.0%, preferably of from 280.0 to 420.0%,

a dripping (determined according to the description) of from 0.06 to 0.25%, preferably of from 0.06 to 0.15%, an impact strength (0°C, Charpy notched ISO 179-1) of from 100.0 to 120.0 kJ/m$^2$, preferably 103.0 to 110.0 kJ/m$^2$ and an impact strength (-20°C, Charpy notched ISO 179-1) of from 107.0 to 120.0 kJ/m$^2$, preferably of from 110.0 to 118.0 kJ/m$^2$, and

a flexural modulus FM (ISO 178) of from 635 to 715 MPa, preferably of from 660 to 710 MPa.

**Use of the HFFR PCR-derived polymer composition and Wire or Cable**

The present invention relates to the use of the above halogen-free flame retardant (HFFR) post-consumer recycled (PCR)-derived polymer composition as a flame retardant layer of a wire or cable, preferably as a flame retardant jacketing layer.

The present invention further relates to a wire or cable, comprising a flame retardant layer comprising the halogen-free flame retardant (HFFR) post-consumer recycled (PCR)-derived polymer composition, wherein the flame retardant layer is preferably a flame retardant jacketing layer. Preferably, at least 90 wt%, more preferably at least 95 wt%, more preferably at least 99 wt% of the wire or cable is made of the HFFR PCR-derived polymer composition described above and it also possible and preferred that the wire or cable is made of 100 wt%, i.e. consists of the HFFR PCR-derived polymer composition.

Preferably, the wire or cable comprises a metal conductor and one or more layers surrounding the metal conductor, wherein at least one of the layers, preferably the jacketing layer, is the flame retardant layer comprising the HFFR PCR-derived polymer composition.

Due to the excellent properties of the present HFFR PCR-derived polymer composition satisfying high demands in terms of safety (flame retardancy, dripping) and mechanical properties, the cable may be a high voltage (HV) or extra high voltage (EHV) power cable, but is not limited thereto.

Methods for producing a wire or cable are commonly known. The present HFFR PCR-derived polymer composition can be extruded around a wire or cable to form an insulating or jacketing layer or can even be used as bedding compounds. The method may include co-extrusion of the different layers onto the metal conductor (conducting core) in case of a multilayer structure.

**Examples**

**1. Measuring methods**

**Melt flow rate (MFR)**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR was determined at 190°C for polyethylene and polyethylene compositions. MFR may be determined at different loadings such as 2.16 kg ($MFR_2$), 5 kg ($MFR_5$) or 21.6 kg ($MFR_{21}$).

**Density**

The density of a polymer or polymer composition was measured according to ASTM D792, Method B (density by balance at $23\pm0.1$°C) on compression-molded specimen prepared according to EN ISO 1872-2 upon conditioning of the specimens at $23\pm2$°C and is given in $kg/m^3$.

**Tensile strength and elongation at break (MPa and %)**

For tensile testing, dog bone specimens of 5A were prepared according to ISO 527-2/5A by die cutting from compression molded plaques of 2 mm thickness. If ageing is needed, the 5A specimens are kept at 110°C in a cell oven for 14 days (336 hours). All specimens were conditioned for at least 16 hours at 23°C and 50% relative humidity before testing.
Tensile properties were measured according to ISO 527-1/2 at 23°C and 50% relative humidity with Alwetron R24, 1kN load cell. Tensile testing speed was 50mm/min, grip distance was 50 mm and gauge length was 20 mm.

**Particle size**

The particle size of e.g. metal carbonate or carbon black can be measured by laser diffraction (ISO13320), dynamic light scattering (ISO22412) or sieve analysis (ASTMD1921-06). For the metal carbonate and carbon black, the particle size is determined as the median particle size d50 (volume) by laser diffraction and any limitation of the claims shall refer to values obtained from laser diffraction (ISO13320) with volume d50.

**Impact strength**

The impact strength is determined as Charpy Notched Impact Strength according to ISO 179-1 eA at-20°C, at 0°C or at 23°C on compression molded specimens of 80 x 10 x 4 mm prepared according to ISO 17855-2.

**Flexural Modulus (FM)**

The flexural modulus is determined in 3-point-bending at 23°C according to ISO 178 on 80 x 10 x 4 mm test bars injection molded in line with EN ISO 1873-2.

**Dynamic Shear Measurements (frequency sweep measurements)**

The characterization of melt of a polymer composition or a polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates, using nitrogen atmosphere and setting a strain within the linear viscoelastic regime. The oscillatory shear tests were done at 190°C applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \tag{1}$$

If the applied strain is within the linear viscoelastic regime, the resulting sinusoidal stress response can be given by

$$\sigma(t) = \sigma_0 \sin(\omega t + \delta) \tag{2}$$

where $\sigma_0$ and $\gamma_0$ are the stress and strain amplitudes, respectively $\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus G", the complex shear modulus G*, the complex shear viscosity $\eta^*$, the dynamic shear viscosity $\eta'$, the out-of-phase component of the complex shear viscosity $\eta"$ and the loss tangent tan $\delta$ which can be expressed as follows:

$$G' = \frac{\sigma_0}{\gamma_0} \cos\delta \; [Pa] \tag{3}$$

$$G'' = \frac{\sigma_0}{\gamma_0} \sin\delta \; [Pa] \tag{4}$$

$$G^* = G' + iG'' \; [Pa] \tag{5}$$

$$\eta^* = \eta' - i\eta'' \; [Pa.s] \tag{6}$$

$$\eta' = \frac{G''}{\omega} \; [Pa.s] \tag{7}$$

$$\eta'' = \frac{G'}{\omega} \; [Pa.s] \tag{8}$$

The determination of so-called Shear Thinning Index (SHI), which correlates with MWD and is independent of Mw, is done as described in equation 9.

$$SHI_{(x/y)} = \frac{Eta^* \text{ for } (G^* = x \; kPa)}{Eta^* \text{ for } (G^* = y \; kPa)} \tag{9}$$

For example, the $SHI_{2.7/210}$ is defined by the value of the complex viscosity, in Pa·s, determined for a value of G* equal to 2.7 kPa, divided by the value of the complex viscosity, in Pa s, determined for a value of G* equal to 210 kPa.
The values of storage modulus (G'), loss modulus (G"), complex modulus (G*) and complex viscosity ($\eta^*$) were obtained as a function of frequency ($\omega$). Thereby, e.g. ($\eta^*_{300rad/s}$ (eta$^*_{300rad/s}$) is used as abbreviation for the complex viscosity at the frequency of 300 rad/s and $\eta^*_{0.05rad/s}$ (eta$^*_{0.05rad/s}$) is used as abbreviation for the complex viscosity at the frequency of 0.05 rad/s.
The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.
The elasticity balance $tan_{0.05}/tan_{300}$ is defined as the ratio of the loss tangent $tan_{0.05}$ and the loss tangent $tan_{300}$.
Reference is made to "Rheological characterization of polyethylene fractions" (Heino, E.L., Lehtinen, A., Tanner J., Seppala, J., Neste Oy, Porvoo, Finland, Theor. Appl. Rheol., Proc. Int. Congr. Rheol, 11th (1992), 1, 360-362), "The influence of molecular structure on some rheological properties of polyethylene" (Heino, E.L., Borealis Polymers Oy, Porvoo, Finland, Annual Transactions of the Nordic Rheology Society, 1995), and "Definition of terms relating to the non-ultimate mechanical properties of polymers" (Pure & Appl. Chem., Vol. 70, No. 3, pp. 701-754, 1998).

**Metal contaminants**

The amount of metals was determined using X-ray fluorescence analysis (XRF): The pellet sample was pressed to a 100 x 100 x 3 mm plaque (150°C for 2 minutes, under pressure of 5 bar and cooled to room temperature). Atom content is analysed by wavelength dispersive XRF (AXS S4 Pioneer Sequential X-ray Spectrometer supplied by Bruker).

Generally, in the XRF-method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis may be performed. The quantitative methods are calibrated with compounds with known concentrations of the element of interest e.g. prepared in a Brabender compounder.

**Tear resistance**

Tear resistance was measured on compression molded plaques of 1 mm thickness according to BS 6469 section 99.1. A test piece with a cut was used to measure the tear force by means of a tensile testing machine. The tear resistance was calculated by dividing the maximum force needed to tear the specimen by its thickness.

**Tape extrusion**

The tape extrusion was measured as follows:
tapes of 1.8 mm were produced on a Collin TeachLine E20T tape extruder with a 4.2:1, 20D compression screw with a 20 mm diameter. The temperature profile was 120/140/150/160°C and the screw speed was 55 rpm.

A tape is determined as good Tape with absent of gels and/or lumps.

**Determination of Fire retardancy** - **Measurements 1 to 3**

**1. Horizontal UL-94**

This method determines the resistance to flame spread of simple insulated copper wires in a horizontal position. This method is based on UL1581 FT2 Flame test. Each cable is ignited with a Bunsen burner, which is removed after 30 sec. The length of the burnt cable shall be less than 10 cm to pass the test.

**2. Cone calorimeter measurements**

The cone calorimeter (Dual cone calorimeter from Fire Testing Technology, FTT) method was carried out by following ISO 5660. The plaques prepared as described above for the metal contaminants were placed in a climate room with relative humidity 50 $\pm$ 5% and temperature 23°C for at least 24 hours prior to the test. Before initializing the tests, the smoke system, gas analyzers, c-factor value, heat flux and scale were calibrated through software ConeCalc 5. Drying aid and Balston filter were checked and exchanged if necessary. The sample plaques were weighed and the exact dimensions were determined before the bottom and sides were wrapped in a 0.3 mm thick aluminium foil and placed in a sample holder filled with a fiber blanket and a frame on top. The sample was placed in a horizontal position on a 22 loading cell 60 mm from the cone radiant heater with heat flux 35 kW/m$^2$ and volume flow rate 24 l/min. Heat release rate, time to ignition and smoke production among others was tested in a FTT cone calorimeter according to ISO5660-1:2019. Test objects were compression moulded plaques of 100x100x3 mm. The maximum heat release is recorded as peak heat release rate (pHRR).

**3. Dripping test**

This method determines how different formulations drop, when they burn.

A metal grid with a size of 8 meshes and diameter of 150 mm is used.

Each polymer composition test plate is pressed into 3.0 mm thickness and cut to an area of 65 x 65 mm.

Before testing, the sample is conditioned at 23°C for at least 16 hours at 50% relative humidity. The test is then carried out in a fume cupboard. The temperature in the fume cupboard shall be (23 $\pm$ 1.0) °C.

Calibration of a flow-meter is performed when changing the gas bottle. The recorder is calibrated and the flow on the flow-meter is set to Butane: 650 + -30 ml / min (23°C, 100kPa). The plate is placed in the middle of a net.

A burner is lighted with a stable flame of approximately 130 mm with an inner blue flame of approximately 50 mm. The burner is placed at a 45 degree angle inclined towards the centre of the sample and that the tip of the inner blue flame hits the centre of the surface of the test object. The burner is kept in this position during the entire text execution. The test time varies greatly depending on the flammability of the material. When the sample is stops burning the burner is removed. At least three tests per sample are performed.

The drops are collected in a water bath at the bottom. The water is dried away and the drops are weighted. The weight of the dried droplet remains is divided by the original mass (m/m) and calculated as weight % of the original mass. The test is a comparable test and can divide to comparable materials

## 2. Experimental part

Table 1 shows the formulations of the composition according to the invention (inventive Examples IE1 to IE3) and according to state of the art (comparative Example CE) as reference. Compounding of the formulations was made on Buss L602 and the compounding temperature was in the range of 140-150°C.

Table 1

| Material (%) | Description | CE | 20% PCR IE1 | 25%PCR IE2 | 30% PCR IE3 |
|---|---|---|---|---|---|
| **HDPE1** | HDPE black, 1-butene co-monomer, $MFR_2$ (190°C)= 1.7 g/10min. d=0.955g/cm$^3$. CB= 6.6 wt%) | 17.5 | 16.2 | 11.2 | 6.2 |
| **HDPE2** | HDPE natural, 1-butene co-monomer, $MFR_2$ (190°C)= 0.5 g/10min. d=0.946g/cm$^3$ | 20 | - | - | - |
| FR4897 | Silicon gum | 7 | 7 | 7 | 7 |
| **EBA** | Co-polymer base resin. BA=13 wt%. d=0.925 g/cm$^3$ $MFR_2$ (190°C)= 0.4 (g/10min) | 19.35 | 19.35 | 19.35 | 19.35 |
| **Omya EXH 1 SP** | CaCOs | 30 | 30 | 30 | 30 |
| **PCR** | d=0.960 g/cm$^3$, $MFR_2$ (190°C)= 0.4 g/10min | - | 20 | 25 | 30 |
| **Irg. MD1024** | AO/Metal deactivator | - | 0.1 | 0.1 | 0.1 |
| **Irg. 1010** | AO/UV | 0.2 | 0.2 | 0.2 | 0.2 |
| **CBMB** | Carbon black | 5.95 | 7.15 | 7.15 | 7.15 |
| **Properties** | | | | | |
| **Tape extrusion quality (FR 1,8 mm thickness)** | | good | good | good | good |
| **Mechanical properties (50 mm/min), tensile strength in MPa (elongation at break in %)** | | 11.3 (515) | 115 (449) | 116 (417) | 12.0 (294) |
| **Impact strength -20°C and (0°C) (kJ/m$^2$)** | | 111.93 (101.31) | 110.6 (103.45) | 111.22 (104.91) | 114.88 (107.51) |
| **$MFR_5$ (190°C) [g/10 min]** | | 2 | 2.2 | 1.93 | 1.72 |
| **Cone calorimeter (35 kW/m$^2$, 60mm separation)** | | | | | |
| **TTI (s)** | | 81 | 92 | 93 | 88 |
| **Time to peak HRR (s)** | | 142 | 145 | 165 | 147 |
| **Peak heat release rate, pH HR (kW/m2)** | | 343 | 326 | 318 | 317 |
| **Total heat release, THR (MJ/m2)** | | 81 | 72 | 74 | 76 |

(continued)

| Cone calorimeter (35 kW/m$^2$, 60mm separation) | | | | |
|---|---|---|---|---|
| Total smoke production, TSP (m2) | 7.5 | 9 | 8 | 9 |
| horizontal UL94 V(mm/min) | Ok (17) | Ok (15) | Ok (17) | Ok (14) |
| Dripping test (%) | 0.5 | 0.5 | 0.1 | 0.1 |
| Flex. Modulus (Mpa) | 573 | 637 | 642 | 678 |
| Tear resistance (Nlmm) | 13.3 | 12.5 | 12.7 | 12.2 |

CE is a thermoplastic, halogen free flame retardant, UV stabilized, natural jacketing composition with the formulation as shown in Table 1. It was compounded from its materials recipe at the same compounding instrument than the other compositions for use as a virgin reference composition.

HDPE1 is a bimodal high density polyethylene jacketing compound containing dispersed carbon black (CB) as indicated in Table 1.

HDPE2 is a bimodal high density polyethylene jacketing compound as indicated under Table 1 above with the details as given in the following Table 2.

FR4897 is a masterbatch with 40 wt% ultrahigh molecular weight polydimethyl siloxane polymer. Commercial source of the siloxane polymer is DuPont Multibase and the carrier is BR6022 from Borealis, which is a LDPE.

EBA is an ethylene butyl acrylate copolymer having a butyl acrylate content of 13 wt%, a density of 0.925 g/cm$^3$ and a MFR$_2$ (190°C) of 0.4 (g/10min).

OMYA EXH 1SP is a CaCO$_3$ with a particle size d50 of 1.4 $\mu$m, distributed by Omya.

PCR is a thermoplastic PCR polymer comprised of HD polyethylene natural colour from household waste stream with a MFR$_2$ (190°C) of 0.4 g/10 min, a density of 960 kg/m$^3$ and low metal contaminants. Furthers details are given in following Table 2.

Irg. MD1024 is a primary phenolic antioxidant and metal deactivator containing 2',3-bis [[3-[3,5-di-tert-butyl-4-hydroxyphenyl] propionyl]] propionohydrazide, commercially available from BASF SE as Irganox MD1024. It was added to all PCR comprising IE compositions to minimize polymer oxidation due to the potential transition metals included on the recyclates.

Irg. 1010 is the high molecular weight sterically hindered phenolic antioxidant pentaerythritol tetrakis[3-[3,5-di-tert-butyl-4-hydroxyphenyl]propionate, commercially available from BASF as Irganox 1010.

CBMB is a carbon black masterbatch with carbon clack having a mean particle size D50 of 11-20 nm. It uses 37 wt% of ELFTEX® 254, 62.2 wt% of OE4517 provided by Borealis (17% EBA with MFR$_2$=8 g/cm$^3$, density = 925.5 kg/m$^3$) and 0,8% of an nitrogen-based antioxidant Vulkanox provided by Lanxess.

Table 2

| Property | HDPE2 | PCR |
|---|---|---|
| Description | HD, Natural color | HD PCR, Natural color |
| MFR 190°C/2.16 kg (g/10 min) | 0.5 | 0.4 |
| Density(kg/m$^3$) | 946 | 960 |
| Flex. Modulus (Mpa) | >900 | 1008 |
| Charpy notched 23°C (kJ/m$^2$) | 14.1 | 39.4 |
| Mechanical properties (50 mm/min), tensile strength in MPa (elongation at break in %) | 28 (680) | 26 (237) |
| Metal contaminants (ppm) | - | Si (138) Ca (85) Ti (68) |
| SHI (2.7/210) | 16 | 36.02 |

A key component to achieve the present invention is the thermoplastic PCR polymer. In the above Table 2, there is a comparison between the properties of a conventional virgin HDPE (HDPE2) that has been replaced in the present invention by the thermoplastic PCR polymer.

Table 1 shows that the inventive PCR comprising compositions IE1 to IE3 were produced replacing HDPE2 and (partially) HDPE1 by thermoplastic PCR polymer. All PCR comprising compositions included metal deactivator to prevent polymer oxidation due to the potential presence of metal impurities.

The flame retardant jacketing key properties were evaluated as shown in Table 1 and all PCR comprising compositions IE1 to IE3 meet all key properties according to general halogen-free flame retardant (HFFR) jacketing cable standards.

In addition, it has been shown that the compositions of IE1 to IE3 comprising the thermoplastic PCR polymer can be easily processed and compounded and tapes can be extruded easily with as good surface finish.

Furthermore, IE2 and IE3, in which most of virgin HDPE is replaced by the thermoplastic PCR polymer, surprisingly perform the dripping test with much less dripping compared to CE and IE1.

Still further, IE3, in which almost all of virgin HDPE is replaced by the thermoplastic PCR polymer, additionally shows improved impact strength both at -20 and 0°C compared to CE. It further shows an optimal elongation at break for a cable material of about 300% making it easy to strip the cable.

The present invention provides a novel halogen-free flame retardant (HFFR) post-consumer recycled (PCR)-derived polymer composition suitable for flame retardant layer of a wire or cable, preferably as a flame retardant jacketing layer, which comprises of from 10.0 to 45.0 wt% of a specific thermoplastic PCR polymer comprised of high density polyethylene (HDPE) polymer showing favorable to excellent mechanical properties combined with favorable to excellent flame retardant and safety properties.

**Claims**

1. A halogen-free flame retardant (HFFR) post-consumer recycled (PCR)-derived polymer composition comprising, based on the overall weight of the polymer composition, the following components

   (A) of from 10.0 to 45.0 wt% of thermoplastic PCR polymer comprised of a high density polyethylene (HDPE) polymer and having a melt flow rate $MFR_2$ (190°C, 2.16 kg, ISO 1133) of from 0.10 to 0.80 g/10min and a density (ASTM D792) of from 0.940 to 0.980 $g/cm^3$;
   (B) of from 0.0 to 30.0 wt% of virgin HDPE polymer selected from the group consisting of component (B-1) and component (B-2) and mixtures thereof, wherein

   component (B-1) is a natural virgin HDPE polymer having a melt flow rate $MFR_2$ (190°C, 2.16 kg, ISO 1133) of from 0.15 to 0.85 g/10min and a density (ASTM D792) of from 0.940 to 0.965 $g/cm^3$, and
   component (B-2) is a virgin HDPE polymer, which is blended with carbon black in an amount of from 1.5 to 7.5 wt% with respect to component (B-2) and which has a melt flow rate $MFR_2$ (190°C, 2.16 kg, ISO 1133) of from 1.00 to 2.40 g/10min and a density (ASTM D792) of from 0.945 to 0.975 $g/cm^3$;

   (C) of from 15.0 to 25.0 wt% of ethylene butyl acrylate (EBA) copolymer having a butyl acrylate content of from 7.0 to 19.0 wt%, a $MFR_2$ (190°C, 2.16 kg, ISO 1133) of from 0.20 to 4.7 g/10min and a density (ASTM D792) of from 0.850 to 0.995 $g/cm^3$;
   (D) of from 2.0 to 12.0 wt% of silicon fluid and/or silicon gum;
   (E) of from 20.0 to 45.0 wt% of calcium and/or magnesium carbonate;
   (F) of from 1.0 to 10.0 wt% of carbon black;
   (G) of from 0.01 to 7.50 wt% of additive(s) selected from group consisting of antioxidant(s), UV-stabilizer(s), and metal deactivator(s) and mixtures thereof, and wherein two or more functions can be combined in the same molecule; and
   (H) of from 0.00 to 7.00 wt% of other ingredients,

   wherein the sum of components (A), optional (B), (C) to (G) and optional (H) add up to 100 wt%.

2. The halogen-free flame retardant (HFFR) post-consumer recycled (PCR)-derived polymer composition according to claim 1,

   wherein the polymer composition has a tensile strength (ISO 527-2/5A) of from 8.0 to 20.0 MPa, preferably of from 10.0 to 16.0 MPa, more preferably of from 11.0 to 14.0 MPa, and an elongation at break (ISO 527-2/5A) of from 240.0 to 550.0%, preferably of from 255.0 to 495.0%, more preferably of from 270.0 to 455.0%, even more preferably of from 280.0 to 420.0%, most preferably of from 285.0 to 350.0%, and/or
wherein the polymer composition has a melt flow rate $MFR_5$ of (190°C, 5 kg, ISO 1133) of from 0.8 to 5.0 g/10min, preferably of from 1.0 to 4.0 g/10min, more preferably of from 1.2 to 3.0 g/10min, most preferably of from 1.5 to 2.5 g/10min, and/or
wherein the polymer composition has a dripping (determined according to the description) of from 0.02 to 0.75%, preferably of from 0.04 to 0.50%, more preferably of from 0.06 to 0.25%, most preferably of from 0.06 to 0.15%, and/or
wherein the polymer composition has an impact strength (0°C, Charpy notched ISO 179-1) of from 90.0 to 125.0 $kJ/m^2$, preferably of from 100.0 to 120.0 $kJ/m^2$, more preferably of from 101.5 to 115.0 $kJ/m^2$, most preferably 103.0 to 110.0 $kJ/m^2$ and an impact strength (-20°C, Charpy notched ISO 179-1) of from 95.0 to 135.0 $kJ/m^2$, preferably of from 105.0 to 130.0 $kJ/m^2$, more preferably of from 107.0 to 120.0 $kJ/m^2$, most preferably of from 110.0 to 118.0 $kJ/m^2$, and/or
wherein the polymer composition has a flexural modulus FM (ISO 178) of from 580 to 750 MPa, preferably of from 610 to 730 MPa, more preferably of from 635 to 720 MPa, even more preferably of from 640 to 715 MPa, most preferably of from 660 to 710 MPa.

3. The halogen-free flame retardant (HFFR) post-consumer recycled (PCR)-derived polymer composition according to claim 1 or 2,

wherein the component (A) is contained in the polymer composition in an amount of from 15.0 to 40.0 wt%, preferably of from 20.0 to 38.0 wt%, more preferably of from 23.0 to 37.0 wt%, most preferably of from 28.0 to 35.0 wt%, and/or
wherein the optional component (B), if contained, is contained in the polymer composition in an amount of from 0.5 to 20.0 wt%, preferably of from 1.0 to 16.5 wt%, more preferably of from 2.0 to 13.0 wt%, even more preferably of from 2.5 to 8.0 wt%, most preferably 4.0 to 7.5 wt%, wherein the component (B) is preferably contained and wherein the component (B) is more preferably the component (B-2), and/or
wherein the component (C) is contained in the polymer composition in an amount of from 16.5 to 23.5 wt%, preferably of from 17.5 to 22.5 wt%, more preferably of from 18.0 to 21.5 wt%, and/or
wherein the component (D) is contained in the polymer composition in an amount of from 2.5 to 10.0 wt%, preferably of from 3.0 to 9.0 wt%, more preferably of from 5.0 to 8.5 wt%, and/or
wherein the component (E) is contained in the polymer composition in an amount of from 22.0 to 42.0 wt%, preferably of from 24.0 to 38.0 wt%, more preferably of from 25.0 to 35.0 wt%, and/or
wherein the component (F) is contained in the polymer composition in an amount of from 2.0 to 9.0 wt%, preferably of from 3.0 to 9.0 wt%, more preferably of from 5.0 to 8.5 wt%, and/or
wherein the component (G) is contained in the polymer composition in an amount of from 0.02 to 5.00 wt%, preferably of from 0.03 to 3.50 wt%, more preferably of from 0.10 to 2.50 wt%, most preferably 0.20 to 1.50 wt%, wherein metal deactivator(s) among component (G) is preferably contained in the polymer composition in an amount of from 0.02 to 2.50 wt%, more preferably of from 0.05 to 1.50 wt%, most preferably of from 0.07 to 0.50 wt%, and antioxidant(s), preferably antioxidant(s) and UV-stabilizer(s), among component (G) is preferably contained in the polymer composition in an amount of from 0.05 to 2.50 wt%, more preferably of from 0.10 to 1.50 wt%, most preferably of from 0.15 to 0.60 wt%, and/or
wherein the optional component (H), if contained, is contained in the polymer composition in an amount of from 0.01 to 5.00 wt%, preferably of from 0.01 to 2.50 wt%, more preferably of from 0.01 to 1.50 wt%, most preferably of from 0.02 to 1.00 wt%, wherein the sum of components (A), optional (B), (C) to (G) and optional (H) add up to 100 wt%.

4. The halogen-free flame retardant (HFFR) post-consumer recycled (PCR)-derived polymer composition according to any one of claims 1 to 3,
wherein the component (A) has

a melt flow rate $MFR_2$ (190°C, 2.16 kg, ISO 1133) of from 0.15 to 0.65 g/10min, preferably of from 0.20 to 0.55 g/10min, more preferably of from 0.25 to 0.50 g/10min,
a density (ASTM D792) of from 0.945 to 0.975 $g/cm^3$, preferably of from 0.950 to 0.970 $g/cm^3$,
preferably a share thinning index $SHI_{2.7/210}$ (ISO 6721-1 and ISO 6721-10) of from 22.0 to 50.0, more preferably of from 25.0 to 45.0, most preferably of from 30.0 to 40.0,
preferably an impact strength (23°C, Charpy notched ISO 179-1) of from 20.0 to 60.0 $kJ/m^2$, more preferably of from 25.0 to 55.0 $kJ/m^2$, even more preferably of from 30.0 to 50.0 $kJ/m^2$, most preferably of from 32.0 to 45.0

kJ/m$^2$,
preferably a tensile strength (ISO 527-2/5A) of from 10.0 to 50.0 MPa, more preferably of from 15.0 to 40.0 MPa, most preferably of from 20.0 to 30.0 MPa, and
preferably an elongation at break (ISO 527-2/5A) of from 150.0 to 400.0%, more preferably of from 180.0 to 300.0%, most preferably of from 200.0 to 270.0%.

5. The halogen-free flame retardant (HFFR) post-consumer recycled (PCR)-derived polymer composition according to any one of claims 1 to 4,

wherein the component (B-1) is a natural virgin HDPE polymer having

a melt flow rate MFR$_2$ (190°C, 2.16 kg, ISO 1133) of from 0.20 to 0.75 g/10min, preferably of from 0.35 to 0.65 g/10min, and
a density (ASTM D792) of from 0.940 to 0.960 g/cm$^3$, preferably of from 0.942 to 0.955 g/cm$^3$, and
preferably being a copolymer of ethylene and 1-butene, more preferably a bimodal HOPE polymer; and/or

wherein the component (B-2) is a virgin HDPE polymer, which is blended with carbon black in an amount of from 1.8 to 7.5 wt%, preferably of from 2.0 to 7.0 wt%, with respect to component (B-2) and which has

a melt flow rate MFR$_2$ (190°C, 2.16 kg, ISO 1133) of from 1.20 to 2.20 g/10min, preferably of from 1.45 to 2.10 g/10min, most preferably of from 1.55 to 1.95 g/10min, and
a density (ASTM D792) of from 0.945 to 0.970 g/cm$^3$, preferably of from 0.950 to 0.965 g/cm$^3$, and
preferably being a copolymer of ethylene and 1-butene, more preferably a bimodal HDPE polymer.

6. The halogen-free flame retardant (HFFR) post-consumer recycled (PCR)-derived polymer composition according to any one of claims 1 to 5,
wherein the component (C) is an ethylene butyl acrylate (EBA) copolymer having

a butyl acrylate content of from 7.5 to 17.0 wt%, preferably of from 8.0 to 16.0 wt%,
a MFR$_2$ (190°C, 2.16 kg, ISO 1133) of from 0.25 to 2.0 g/10min, preferably of from 0.30 to 1.0 g/10min, most preferably of from 0.30 to 0.60 g/10min , and
a density (ASTM D792) of from 0.875 to 0.975 g/cm$^3$, preferably of from 0.900 to 0.955 g/cm$^3$, most preferably of from 0.910 to 0.945 g/cm$^3$.

7. The halogen-free flame retardant (HFFR) post-consumer recycled (PCR)-derived polymer composition according to any one of claims 1 to 6,

wherein the component (D) is a silicon gum, and/or
wherein the component (E) is calcium carbonate.

8. The halogen-free flame retardant (HFFR) post-consumer recycled (PCR)-derived polymer composition according to any one of claims 1 to 7,

wherein the component (G) includes at least antioxidant(s) and metal deactivator(s), wherein the functions can be combined in the same molecule, and/or
wherein the antioxidant(s) include phenolic-type antioxidant(s), and/or
wherein the metal deactivator(s) include hydrazine-based metal deactivator(s), and/or
wherein the component (H), if contained, comprises at least one selected from the group consisting of antistatic agents, slip agents, acid scavengers, lubricants, utilization agents, polymer additives, fillers, nucleating agents, coloring agents, anti-block agents and processing aids.

9. The halogen-free flame retardant (HFFR) post-consumer recycled (PCR)-derived polymer composition according to any one of claims 1 to 8,
wherein the weight ratio of component (A) to component (B), if contained, is in the range from 1.1 to 25.0, preferably in the range from 1.2 to 15.0 and more preferably in the range from 2.0 to 9.0, most preferably in the range of 4.0 to 7.5.

10. The halogen-free flame retardant (HFFR) post-consumer recycled (PCR)-derived polymer composition according to any one of claims 1 to 9,

wherein the weight ratio of component (A) to component (C) is in the range from 0.7 to 2.5, preferably in the range from 0.9 to 2.2, more preferably in the range from 1.0 to 2.0, more preferably in the range from 1.2 to 1.7.

11. The halogen-free flame retardant (HFFR) post-consumer recycled (PCR)-derived polymer composition according to any one of claims 1 to 10,
which comprises, based on the overall weight of the polymer composition

(A) of from 20.0 to 38.0 wt%, preferably of from 23.0 to 37.0% of the thermoplastic PCR polymer comprised of high density polyethylene (HDPE) polymer and having

a melt flow rate $MFR_2$ (190°C, 2.16 kg, ISO 1133) of from 0.20 to 0.55 g/10min, preferably of from 0.25 to 0.50 g/10min,
a density (ASTM D792) of from 0.945 to 0.975 g/cm$^3$, preferably of from 0.950 to 0.970 g/cm$^3$,
a share thinning index $SHI_{2.7/210}$ (ISO 6721-1 and ISO 6721-10) of from 25.0 to 45.0, preferably of from 30.0 to 40.0,
an impact strength (23°C, Charpy notched ISO 179-1) of from 25.0 to 55.0 kJ/m$^2$, preferably of from 30.0 to 50.0 kJ/m$^2$, more preferably of from 32.0 to 45.0 kJ/m$^2$,
a tensile strength (ISO 527-2/5A) of from 15.0 to 40.0 MPa, preferably of from 20.0 to 30 MPa, and
an elongation at break (ISO 527-2/5A) of from 180.0 to 300.0%, preferably of from 200.0 to 270.0%;

(B) of from 0.0 to 20.0 wt%, preferably 1.0 to 16.5 wt%, more preferably of from 2.0 to 13.0 wt%, most preferably of from 2.5 to 8.0 wt% of virgin HDPE polymer selected from the group consisting of the component (B-1) and the component (B-2) and mixtures thereof, and wherein the component (B) is preferably the component (B-2), wherein

the component (B-1) is a natural virgin HDPE polymer having a melt flow rate $MFR_2$ (190°C, 2.16 kg, ISO 1133) of from 0.20 to 0.75 g/10min, preferably of from 0.35 to 0.65 g/10min, and a density (ASTM D792) of from 0.940 to 0.960 g/cm$^3$, preferably of from 0.942 to 0.955 g/cm$^3$, and which is preferably a copolymer of ethylene and 1-butene, more preferably a bimodal HDPE polymer, and
component (B-2) is a virgin HDPE polymer, which is blended with carbon black in an amount of from 1.8 to 7.5 wt%, preferably of from 2.0 to 7.0 wt%, with respect to component (B-2) and which has a melt flow rate $MFR_2$ (190°C, 2.16 kg, ISO 1133) of from 1.45 to 2.10 g/10min, most preferably of from 1.55 to 1.95 g/10min and a density (ASTM D792) of from 0.945 to 0.970 g/cm$^3$, preferably of from 0.950 to 0.965 g/cm$^3$, and which is preferably a copolymer of ethylene and 1-butene, more preferably a bimodal HDPE polymer;

(C) of from 16.5 to 23.5 wt%, preferably of from 17.5 to 22.5 wt%, more preferably of from 18.0 to 21.5 wt% of ethylene butyl acrylate (EBA) copolymer having a butyl acrylate content of from 7.5 to 157.0 wt%, preferably of from 8.0 to 16.0 wt%, a $MFR_2$ (190°C, 2.16 kg, ISO 1133) of from 0.25 to 2.0 g/10min, preferably of from 0.30 to 1.0 g/10min, most preferably of from 0.30 to 0.60 g/10min, and a density (ASTM D792) of from 0.900 to 0.955 g/cm$^3$, preferably of from 0.910 to 0.945 g/cm$^3$;
(D) of from 3.0 to 9.0 wt%, preferably of from 5.0 to 8.5 wt% of silicon gum;
(E) of from 24.0 to 38.0 wt%, preferably of from 25.0 to 35.0 wt% of calcium carbonate;
(F) of from 3.0 to 9.0 wt%, preferably of from 5.0 to 8.5 wt% of the carbon black;
(G) of from 0.10 to 2.50 wt%, preferably of from 0.20 to 1.50 wt% of the additive(s) at least comprising antioxidant(s) including phenolic-type antioxidant(s) and metal deactivator(s) including hydrazine-based metal deactivator(s) and mixtures thereof, wherein the functions can be combined in the same molecule; and
(H) of from 0.00 to 2.50 wt%, preferably of from 0.01 to 1.50 wt%, more preferably 0.01 to 1.00 wt% of other ingredients including at least one selected from the group consisting of antistatic agents, acid scavengers, slip agents, lubricants, utilization agents, polymer additives, fillers, nucleating agents, coloring agents, anti-block agents, and processing aids,
wherein the sum of components (A), optional (B), (C) to (G) and optional (H) add up to 100 wt%,
wherein the weight ratio of component (A) to component (B), if present, is in the range from 1.1 to 25.0, preferably in the range from 1.2 to 15.0 and more preferably in the range from 2.0 to 7.0,
wherein the weight ratio of component (A) to component (C) is in the range from 0.9 to 2.2, preferably in the range from 1.0 to 2.0, more preferably in the range from 1.2 to 1.7, and
wherein the polymer composition has

a tensile strength (ISO 527-2/5A) of from 11.0 to 14.0 MPa, and an elongation at break (ISO 527-2/5A) of from 255.0 to 455.0%, preferably of from 280.0 to 420.0%,

a dripping (determined according to the description) of from 0.06 to 0.25%, preferably of from 0.06 to 0.15%,

an impact strength (0°C, Charpy notched ISO 179-1) of from 100.0 to 120.0 kJ/m$^2$, preferably 103.0 to 110.0 kJ/m$^2$ and an impact strength (-20°C, Charpy notched ISO 179-1) of from 107.0 to 120.0 kJ/m$^2$, preferably of from 110.0 to 118.0 kJ/m$^2$, and

a flexural modulus FM (ISO 178) of from 635 to 715 MPa, preferably of from 660 to 710 MPa.

12. Use of the halogen-free flame retardant (HFFR) post-consumer recycled (PCR)-derived polymer composition according to any one of claims 1 to 11 as a flame retardant layer of a wire or cable, preferably as a flame retardant jacketing layer.

13. Wire or cable, comprising a flame retardant layer comprising the halogen-free flame retardant (HFFR) post-consumer recycled (PCR)-derived polymer composition according to any one of claims 1 to 11, wherein the flame retardant layer is preferably a flame retardant jacketing layer.

14. Wire or cable according to claim 13, wherein the wire or cable comprises a metal conductor and one or more layers surrounding the metal conductor, wherein at least one of the layers, preferably the jacketing layer, is the flame retardant layer comprising the halogen-free flame retardant (HFFR) post-consumer recycled (PCR)-derived polymer composition.

15. Wire or cable according to claim 13 or 14, which is a high voltage (HV) or extra high voltage (EHV) power cable.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/095406 A1 (ASHIHARA SHINGO [JP] ET AL) 26 March 2020 (2020-03-26) * paragraphs [0001], [0016] - [0018], [0037], [0047]; claims; examples 8,12 * | 1-15 | INV. C08L23/06 |
| Y | WO 2021/233818 A1 (BOREALIS AG [AT]) 25 November 2021 (2021-11-25) * page 4, line 6 - line 9 * * page 4, line 26 - page 5, line 23; claims; examples IE1,IE2; tables 1-3 * | 1-15 | |
| A | WO 2022/169648 A1 (DOW GLOBAL TECHNOLOGIES LLC [US]) 11 August 2022 (2022-08-11) * paragraphs [0028], [0037]; claims; examples * | 1-15 | |
| A | EP 2 772 516 A1 (FUJIKURA LTD [JP]) 3 September 2014 (2014-09-03) * claims; examples * | 1-15 | |
| | | | TECHNICAL FIELDS SEARCHED (IPC) |
| | | | C08L |

The present search report has been drawn up for all claims

| Place of search | Date of completion of the search | Examiner |
|---|---|---|
| Munich | 19 February 2024 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 2132**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-02-2024**

| Patent document cited in search report | Publication date | Patent family member(s) | | Publication date |
|---|---|---|---|---|
| US 2020095406 A1 | 26-03-2020 | CN | 110951148 A | 03-04-2020 |
| | | JP | 7302155 B2 | 04-07-2023 |
| | | JP | 2020050740 A | 02-04-2020 |
| | | US | 2020095406 A1 | 26-03-2020 |
| WO 2021233818 A1 | 25-11-2021 | CN | 115698165 A | 03-02-2023 |
| | | EP | 4153673 A1 | 29-03-2023 |
| | | US | 2023242744 A1 | 03-08-2023 |
| | | WO | 2021233818 A1 | 25-11-2021 |
| WO 2022169648 A1 | 11-08-2022 | CA | 3206180 A1 | 11-08-2022 |
| | | CN | 116745357 A | 12-09-2023 |
| | | EP | 4288486 A1 | 13-12-2023 |
| | | KR | 20230137412 A | 04-10-2023 |
| | | US | 2023383104 A1 | 30-11-2023 |
| | | WO | 2022169648 A1 | 11-08-2022 |
| EP 2772516 A1 | 03-09-2014 | CN | 103748176 A | 23-04-2014 |
| | | CN | 105086067 A | 25-11-2015 |
| | | CN | 105086492 A | 25-11-2015 |
| | | EP | 2772516 A1 | 03-09-2014 |
| | | JP | 5167428 B1 | 21-03-2013 |
| | | JP | 2014028910 A | 13-02-2014 |
| | | US | 2014234621 A1 | 21-08-2014 |
| | | WO | 2013062077 A1 | 02-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021233818 A1
- EP 2022087 W
- EP 2023056995 W
- FR 4897

### Non-patent literature cited in the description

- *CHEMICAL ABSTRACTS*, 6683-19-8
- *CHEMICAL ABSTRACTS*, 31570-04-4
- *CHEMICAL ABSTRACTS*, 693-36-7
- *CHEMICAL ABSTRACTS*, 52829-07-9
- *CHEMICAL ABSTRACTS*, 1843-05-6
- *CHEMICAL ABSTRACTS*, 31566-31-1
- *CHEMICAL ABSTRACTS*, 112-84-5
- *CHEMICAL ABSTRACTS*, 301-02-0
- *CHEMICAL ABSTRACTS*, 124-26-5
- *CHEMICAL ABSTRACTS*, 97593-29- 8
- *CHEMICAL ABSTRACTS*, 71786-60-2
- *CHEMICAL ABSTRACTS*, 204-393-1
- *CHEMICAL ABSTRACTS*, 1592-23-0
- *CHEMICAL ABSTRACTS*, 822-16-2
- *CHEMICAL ABSTRACTS*, 557-05-1
- *CHEMICAL ABSTRACTS*, 11097-59-9
- Rheological characterization of polyethylene fractions. **HEINO, E.L.** ; **LEHTINEN, A** ; **TANNER J.** ; **SEPPALA, J.** Theor. Appl. Rheol., Proc. Int. Congr. Rheol. Neste Oy, 1992, vol. 1, 360-362
- The influence of molecular structure on some rheological properties of polyethylene. **HEINO, E.L**. Annual Transactions of the Nordic Rheology Society. Borealis Polymers Oy, 1995
- Definition of terms relating to the non-ultimate mechanical properties of polymers. *Pure & Appl. Chem.*, 1998, vol. 70 (3), 701-754